# EUROPEAN PATENT SPECIFICATION

(11) **EP 3 695 702 B1**
(45) Date of publication and mention of the grant of the patent: **10.08.2022**
(21) Application number: 20156584.3
(22) Date of filing: 11.02.2020
(51) Int. Cl.: A01D 34/73

(54) **MOWER BLADE AND ATTACHMENT SYSTEM**
MÄHMESSER UND BEFESTIGUNGSSYSTEM
LAME DE TONDEUSE ET SYSTÈME DE FIXATION

(30) Priority: 11.02.2019 US 201962804013 P
(43) Date of publication of application: 19.08.2020
(73) Proprietor: Techtronic Cordless GP, Anderson, SC 29621 (US)
(72) Inventor: FENG, Michael, Seneca, SC 29672 (US); FELDKAMP, Jonathan R., Anderson, SC 29621 (US); DINGMAN, Trent J., Franklinville, NY 14737 (US); KONDRO, Grzegorz, Piedmont, SC 29673 (US); CHAPMAN, Seth H., Anderson, SC 29621 (US)
(74) Representative: Novagraaf Group

(56) References cited:
- WO-A1-2013/048574
- DE-A1-102016 213 259
- US-A- 3 601 960
- US-A- 4 771 593

## Description

### BACKGROUND

The present disclosure relates to mower blades and, more particularly, to mower blades for riding lawn mowers.

US 4,771,593 A1 discloses a blade coupling assembly for a lawn mower comprising a spindle, which mechanically couples a blade to a drive shaft of an engine. The blade comprises a central blade opening and two cutting blade openings aligned in center-to-center relation with the central blade opening. The cutting blade openings are circular, have the same size and have the same distance to the central blade opening. The central blade opening receives a bolt which fixes the blade to the drive shaft. The spindle is provided with two locking pins, which are received in the cutting blade openings.

DE 10 2016 213259 A1 shows a quick attach rotary mower blade system for use with one or more rotary mower blades under a mower deck. The quick attachment rotary mower blade system comprises a blade holder and a mower blade. The blade holder comprises a pair of L-shaped arms. Each L-shaped arm comprises a protrusion in an upwards direction i.e. in the direction of the mower deck. The mower blade comprises a central opening and a pair of holes. The holes are both circular, have the same size, and the same distance to the central opening, but are arranged on different sides of a longitudinal axis of the blade. It is also disclosed that the holes can be located asymmetrically on the mower blade or may have different shapes or sizes. As a result, the mower blade may be installed in only one position and not upside down. When the mower blade is attached to the blade holder, the protrusions on the L-shaped arms extend through the holes on the mower blade.

### SUMMARY

In one aspect, the present disclosure relates to a blade for a lawn mower. The blade includes a blade body, a longitudinal axis, a center opening, a first aperture, and a second aperture. The blade body has a first end and a second end opposite the first end. The longitudinal axis extends centrally along the blade body and through the first and second ends. The center opening is defined in the blade body. The center opening receives a drive shaft. The first aperture is defined in the blade body between the center opening and the first end. The first aperture receives a first projection. The second aperture is defined in the blade body between the center opening and the second end. The second aperture receives a second projection. The first aperture has a different shape than the second aperture. A centroid of each of the center opening, the first aperture, and the second aperture is substantially aligned with the longitudinal axis. The centroid of the first aperture is a first distance from the centroid of the center opening, the centroid of the second aperture is a second distance from the centroid of the center opening, and the first distance is different from the second distance.

In another aspect, the present disclosure relates to an attachment system for connecting a blade to a lawn mower. The attachment system includes an adapter, and a fastener. The adapter is configured to be coupled to a drive shaft of the lawn mower and to receive a blade. The adapter includes an adapter body, a central bore defined in the adapter body, a first projection extending from the adapter body, and a second projection extending from the adapter body. The central bore is configured to receive the drive shaft. The first projection is configured to engage a first aperture of the blade. The second projection is configured to engage a second aperture of the blade. The second projection is on an opposite side of the central bore from the first projection. The fastener is configured to threadingly engage with the threaded end of the drive shaft. The first projection includes a cross-sectional shape that is different from a cross-sectional shape of the second projection. A centroid of the first projection cross-sectional shape is spaced apart from a centroid of the central bore by a first distance, a centroid of the second projection cross-sectional shape is spaced apart from the centroid of the central bore by a second distance, and the first distance is different from the second distance.

In another aspect, the present disclosure relates to a lawnmower. The lawnmower includes a mower deck, a drive shaft, an attachment system as defined above, and a blade as defined above. The drive shaft projects from the mower deck and includes a threaded end. The attachment system is suspended below the mower deck. The attachment system includes an adapter and a fastener. The adapter is coupled to the drive shaft. The fastener is threadingly engaged with the threaded end of the drive shaft. The blade is removably coupled between the adapter and the fastener. The blade includes a blade body, a longitudinal axis, a center opening, a first aperture, and a second aperture. The blade boy has a first end and a second end opposite the first end. The longitudinal axis extends centrally along the blade body and through the first end and the second end. The longitudinal axis extends generally perpendicular to the drive shaft. The center opening is defined in the blade body. The center opening receives the drive shaft therethrough. The center opening has a centroid substantially aligned with the longitudinal axis. The first aperture is defined in the blade body between the center opening and the first end. The first aperture has a centroid substantially aligned with the longitudinal axis. The second aperture is defined in the blade body between the center opening and the second end. The second aperture has a different shape from the first aperture. The second aperture has a centroid substantially aligned with the longitudinal axis.

Other features and aspects of the disclosure will become apparent by consideration of the following detailed description and accompanying drawings.

### BRIEF DESCRIPTION OF THE DRAWINGS

FIG. 1 is a front perspective view of a riding lawn mower in accordance with an embodiment of the invention.
FIG. 2 is a rear perspective view of the riding lawn mower of FIG. 1.
FIG. 3 is a front perspective view of the riding lawn mower of FIG. 1 with portions removed to reveal internal components of the mower.
FIG. 4 is a rear perspective view of the riding lawn mower of FIG. 3.
FIG. 5 is a first side view of the riding lawn mower of FIG. 3.
FIG. 6 is a second side view of the riding lawn mower of FIG. 3.
FIG. 7 is rear view of the riding lawn mower of FIG. 3.
FIG. 8 is front view of the riding lawn mower of FIG. 3.
FIG. 9 is a top view of the riding lawn mower of FIG. 3.
FIG. 10 is bottom view of the riding lawn mower of FIG. 3.
FIG. 11 illustrates a blade attachment system according to one embodiment.
FIG. 12 illustrates an adapter of the blade attachment system according to one embodiment.
FIG. 13A is an exploded view of the blade attachment system of FIG. 11.
FIG. 13B is an exploded view of a blade attachment system according to another embodiment.
FIG. 14 is a detailed view of a mower deck and a controller.

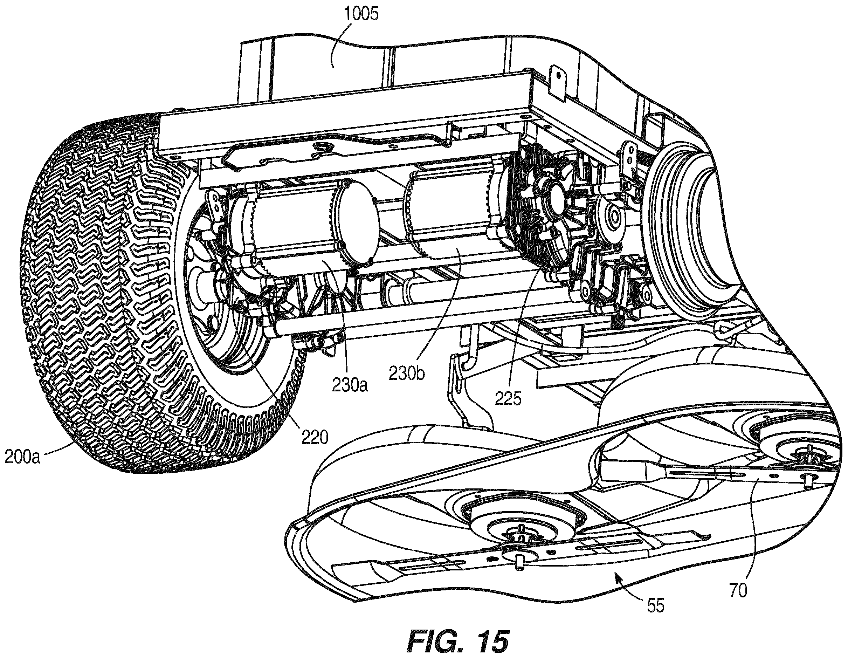

FIG. 15 illustrates traction mowers and drive wheels of the riding lawn mower of FIG. 3.
FIG. 16 illustrates throttles for controlling operation of the mower.
FIG. 17 is a detailed view of one of the throttles of FIG. 13.
FIG. 18 is an exploded view of the throttle of FIG. 14.
FIG. 19 is a side elevation view of the riding lawn mower of FIG. 1.
FIG. 20 is a detailed cross-sectional elevation view of the mower showing a braking system.
FIG. 21 is a detailed bottom plan view of the mower showing the braking system.
FIG. 22 is a detailed side elevation view of mower of FIG. 1 showing a brake control system of the braking system.
FIG. 23 is a detailed cross-sectional elevation view of the mower showing the brake control system of the braking system.
FIG. 24 is a detailed perspective view of the mower showing the brake control system of the braking system.
FIG. 25 is a detailed top plan view of the mower showing the brake control system of the braking system.
FIG. 26 is a detailed perspective view of the mower showing a brake actuation system of the braking system (with the wheel removed from the mower).
FIG. 27 is a block diagram of a lawn mower control system.
FIG. 28 is a perspective view of a user interface panel.
FIG. 29 is a flow diagram of a method of controlling a lawn mower in a reduced speed operating mode.
FIG. 30 is a flow diagram of a method of controlling a lawn mower in a slow-blade operating mode.
FIG. 31 is a graph of operation of the lawn mower in the reduced speed operating mode.
FIG. 32 is a graph of operation of the lawn mower in the slow-blade operating mode.

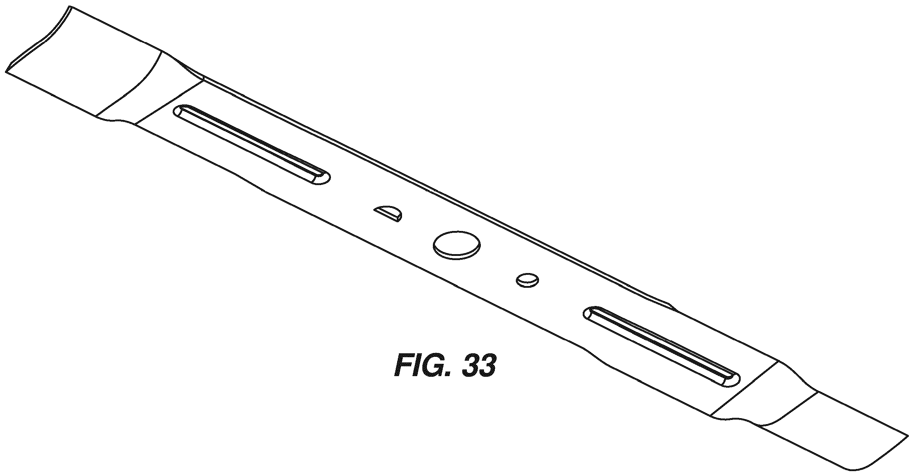

FIG. 33 is a bottom perspective view of a blade according to one embodiment.

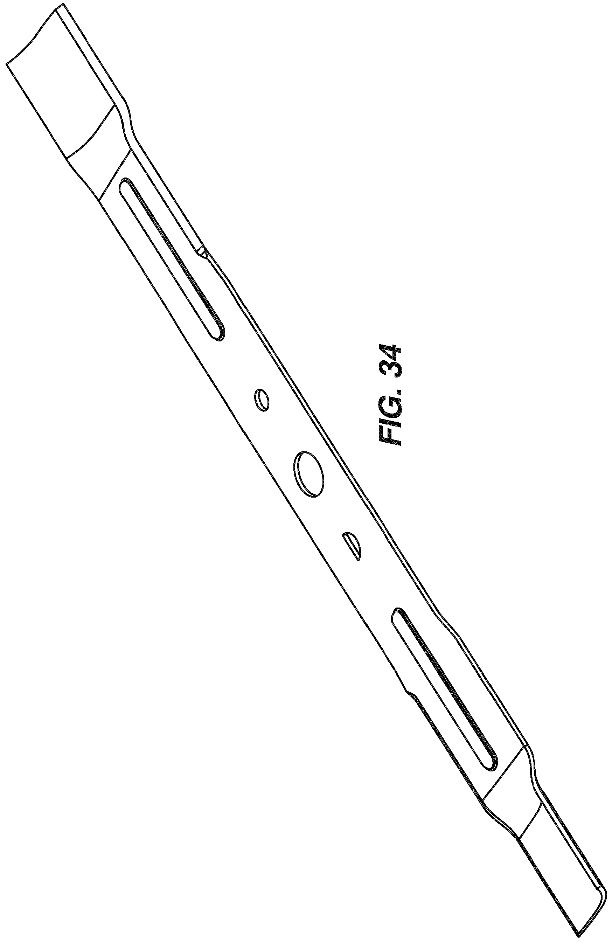

FIG. 34 is a top perspective view of the blade of FIG. 33.

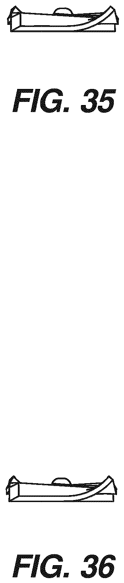

FIG. 35 is a right side elevation view of the blade of FIG. 33.
FIG. 36 is a left side elevation view of the blade of FIG. 33.

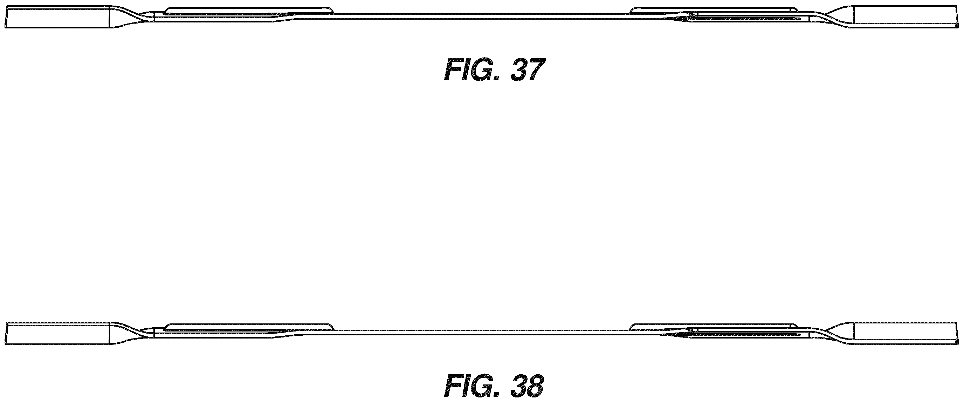

FIG. 37 is a front elevation view of the blade of FIG. 33.
FIG. 38 is a rear elevation view of the blade of FIG. 33.

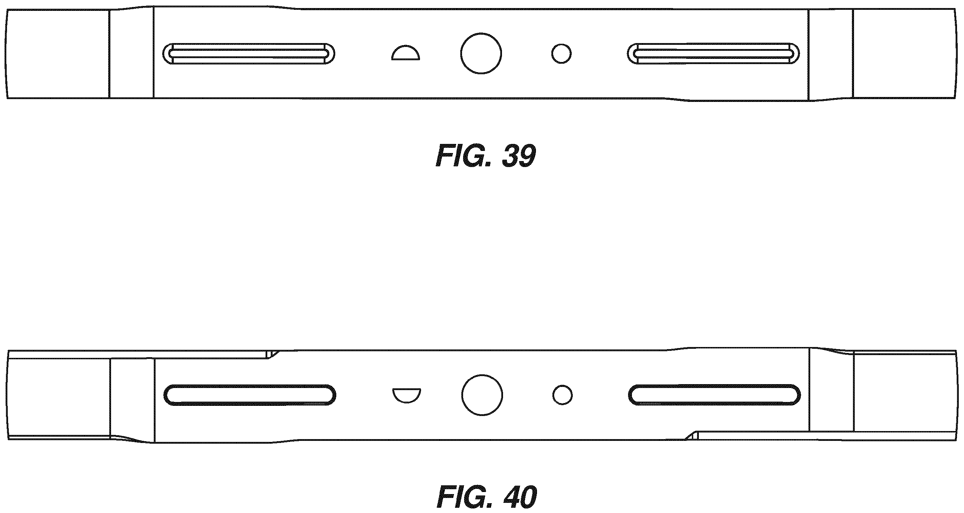

FIG. 39 is a bottom plan view of the blade of FIG. 33.
FIG. 40 is a top plan view of the blade of FIG. 33.

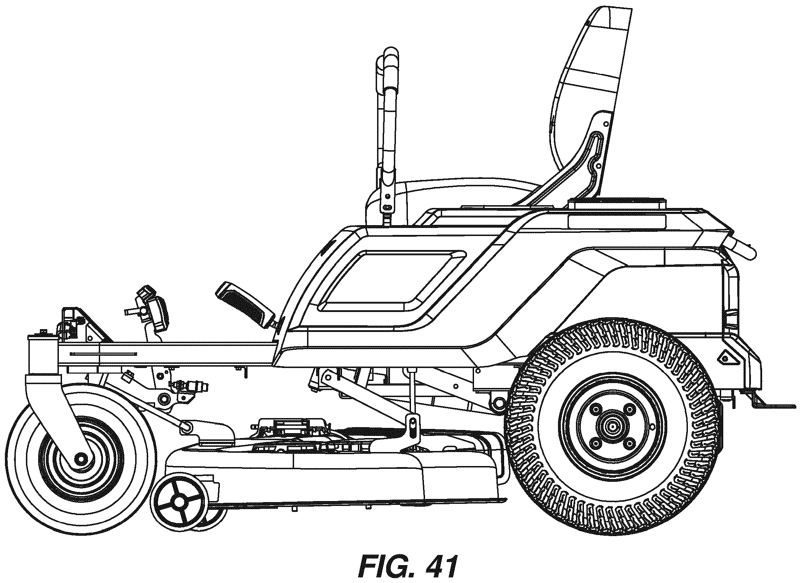

FIG. 41 is a left side elevation view of a lawn mower according to one embodiment.

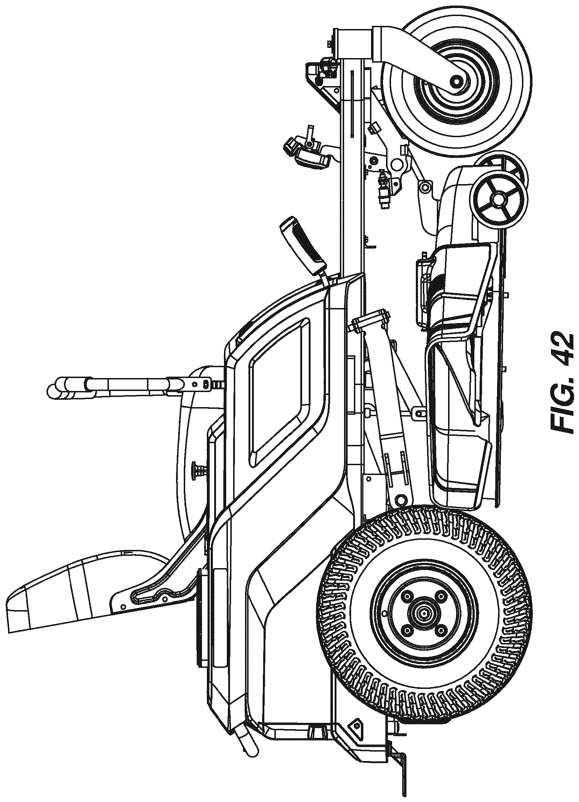

FIG. 42 is a right side elevation view of the lawn mower of FIG. 41.

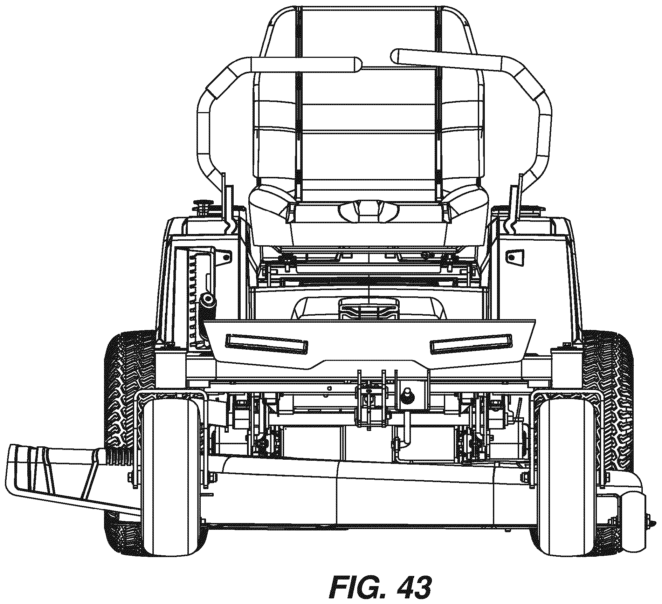

FIG. 43 is a front elevation view of the lawn mower of FIG. 41.

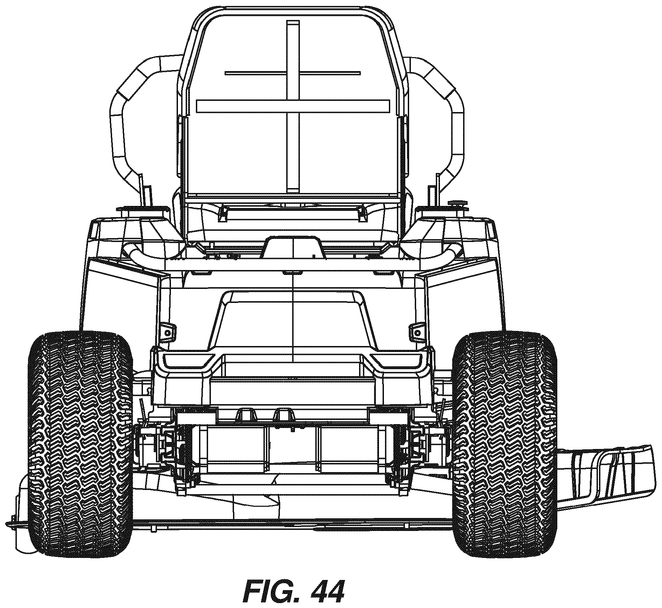

FIG. 44 is a rear elevation view of the lawn mower of FIG. 41.

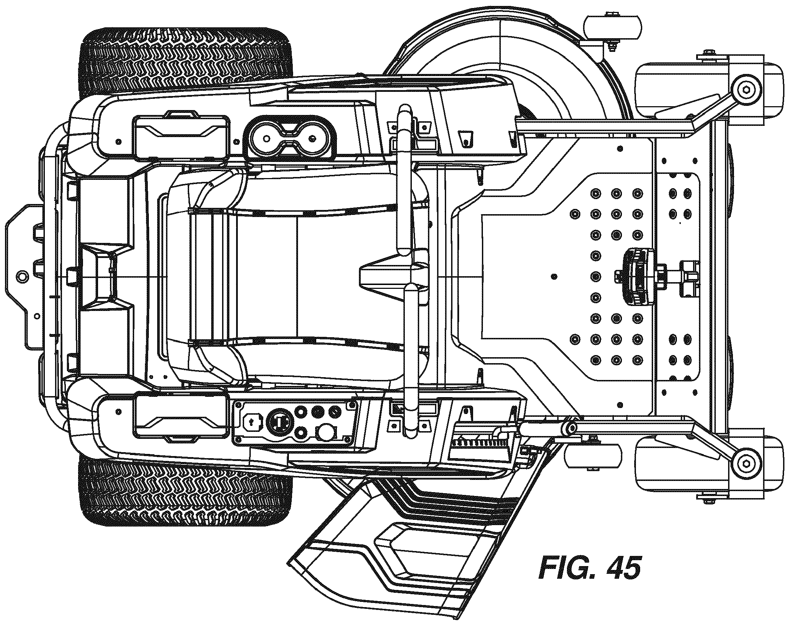

FIG. 45 is a top plan view of the lawn mower of FIG. 41.

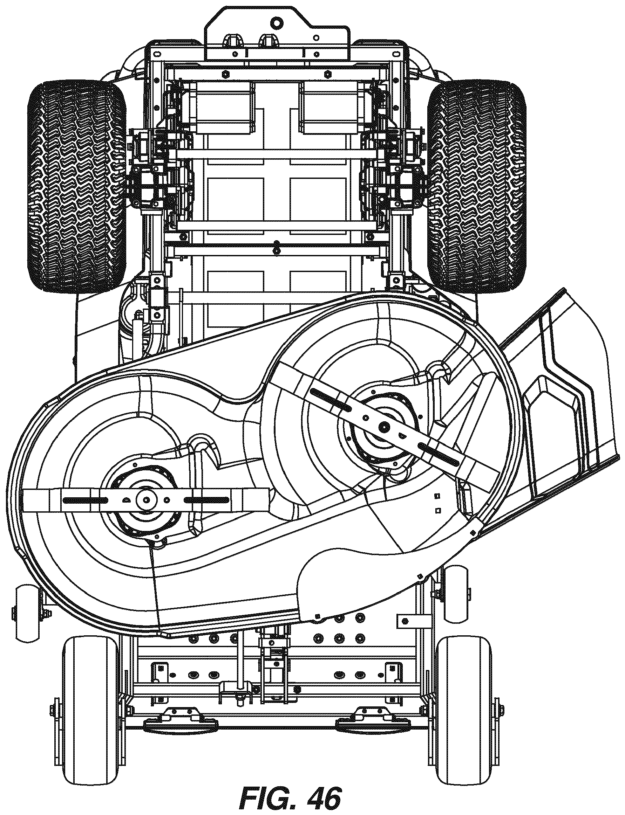

FIG. 46 is a bottom plan view of the lawn mower of FIG. 41.

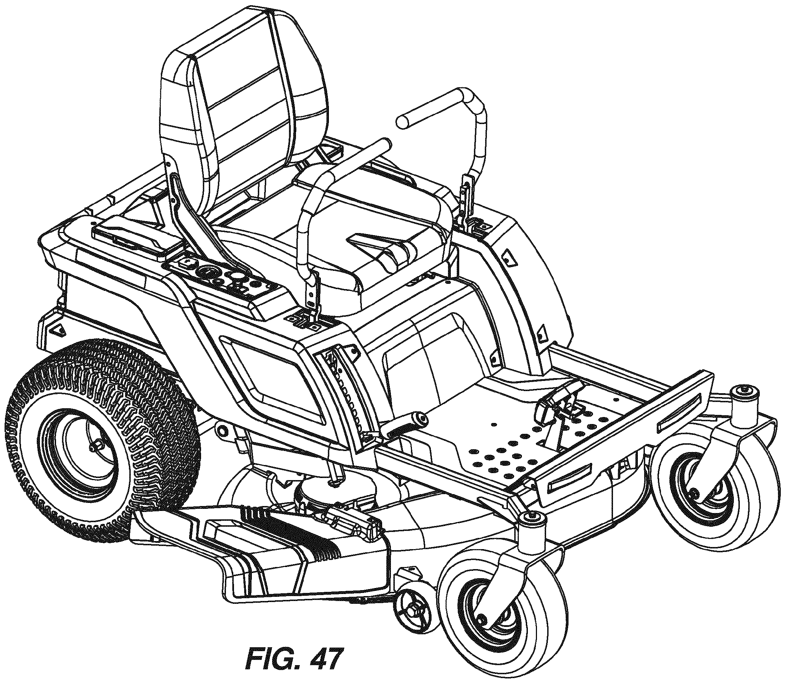

FIG. 47 is a front perspective view of the lawn mower of FIG. 41.

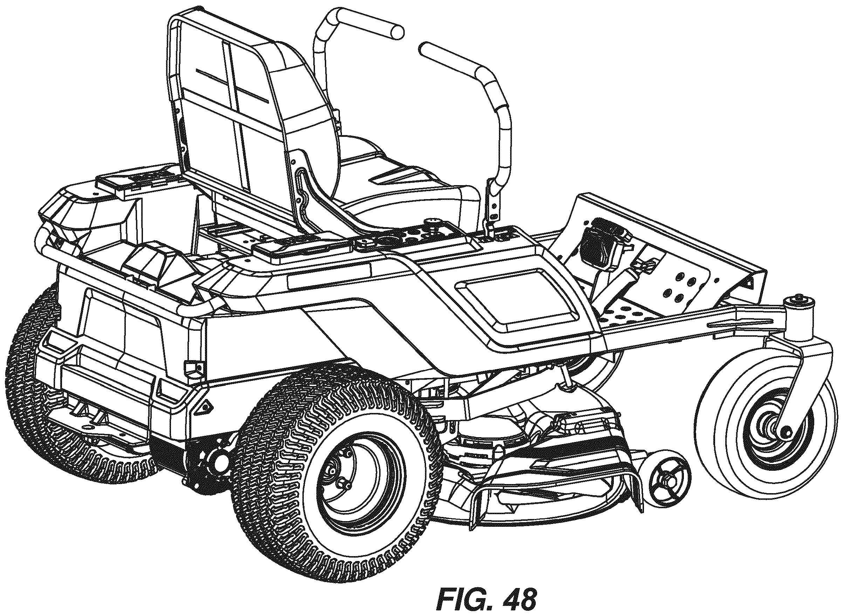

FIG. 48 is a rear perspective view of the lawn mower of FIG. 41.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting.

### DETAILED DESCRIPTION

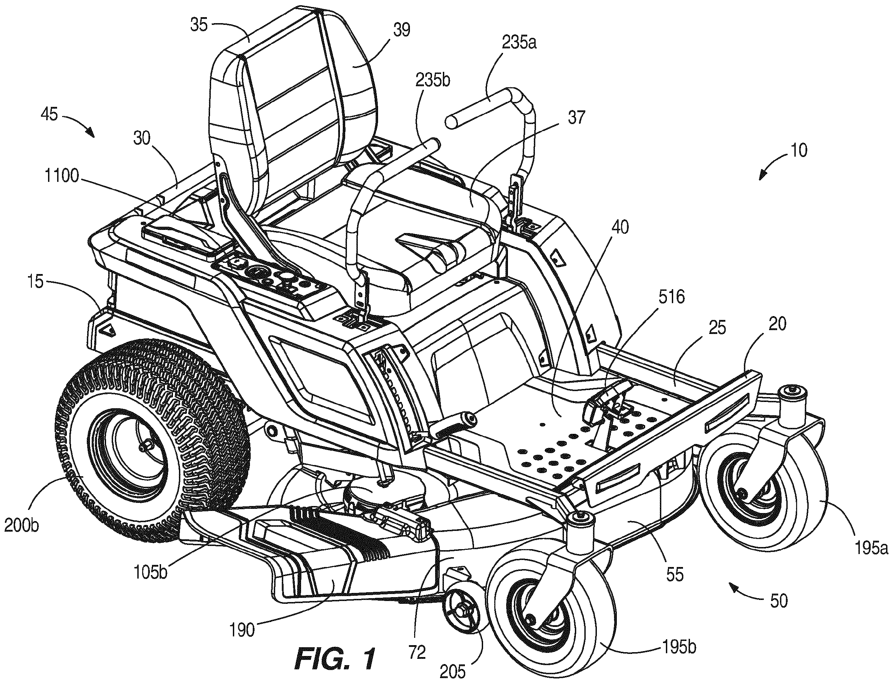

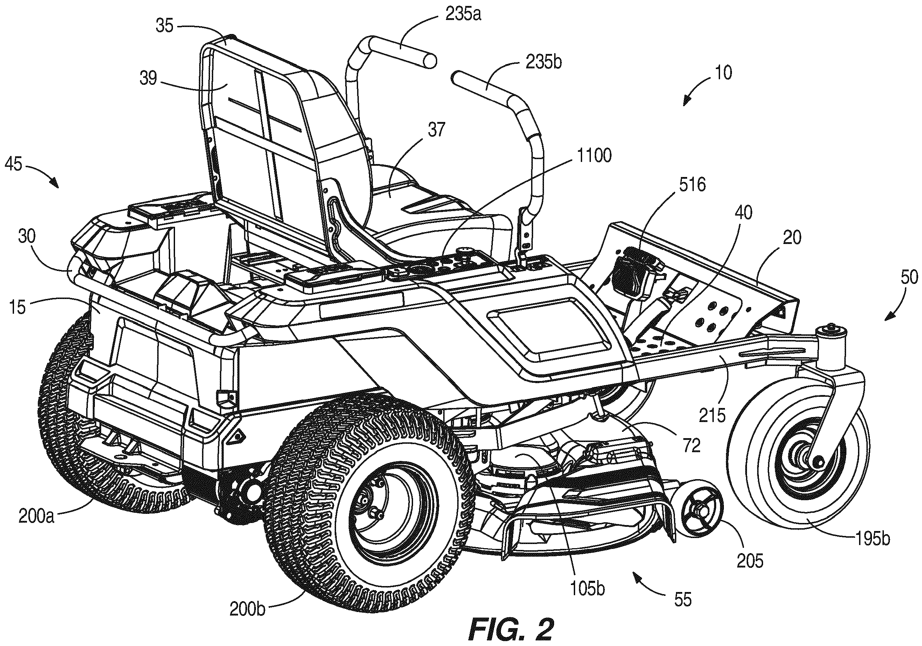

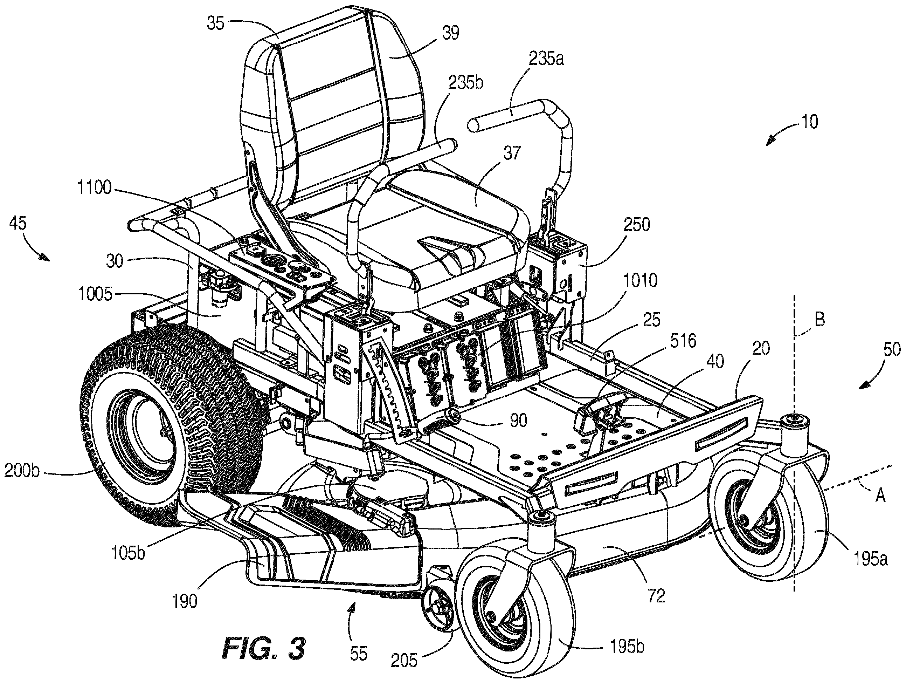

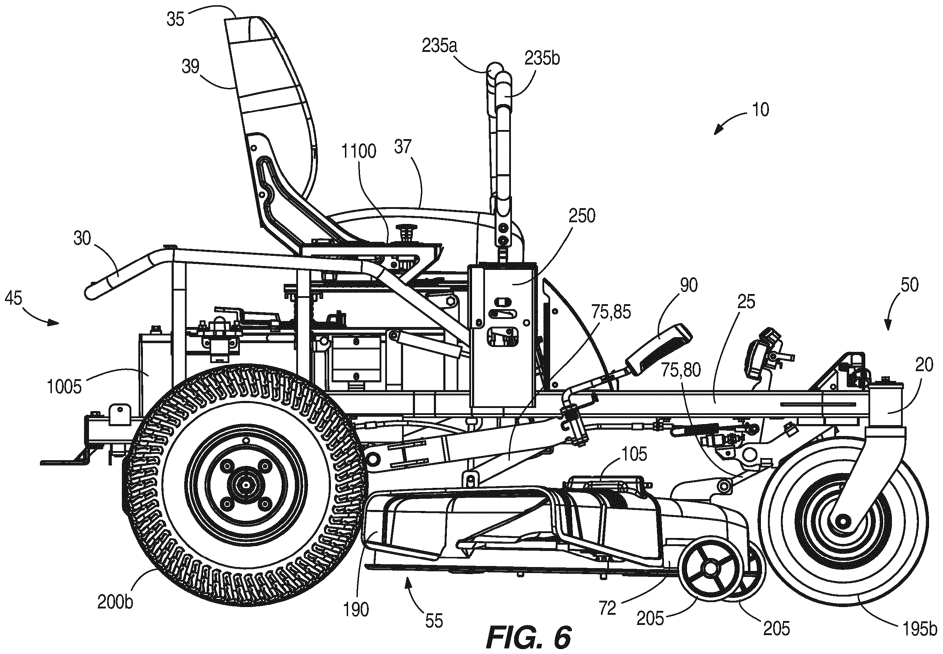

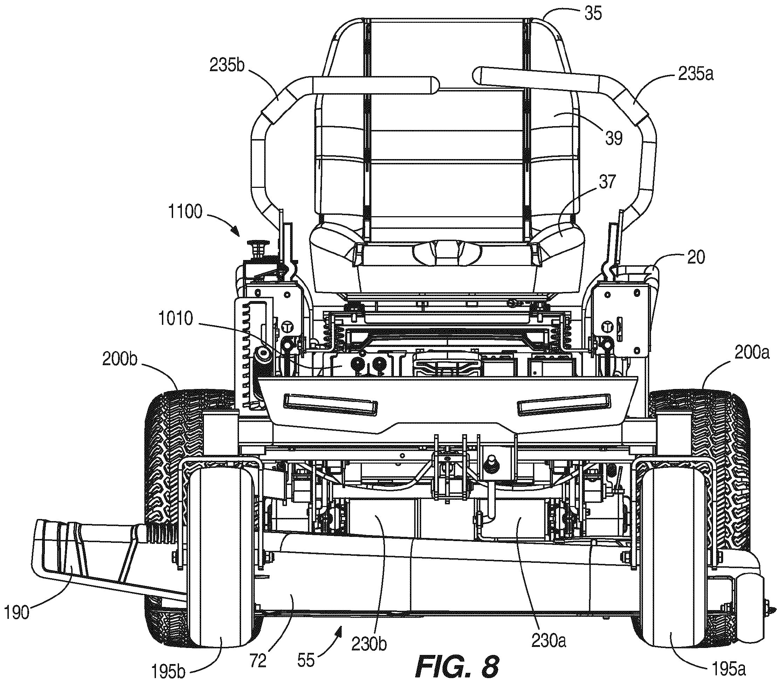

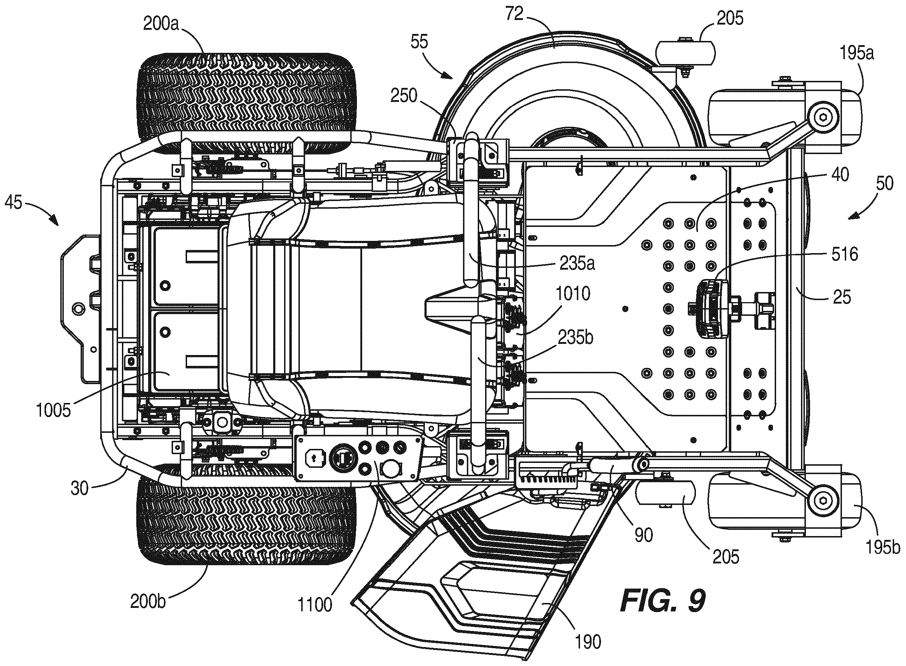

FIGS. 1 and 2 illustrate a riding mower 10 according to one embodiment. FIGS. 3-10 illustrate the riding mower 10 of FIGS. 1 and 2, with portions of an external covering 15 removed to reveal internal portions of the mower 10. In the illustrated embodiment, the external covering 15 includes a series of plastic casings; however, in other embodiments, the external covering 15 can be composed of other materials. The mower 10 includes a frame 20 defining the skeletal structure of the mower 10 and is configured to support the various working components of the mower 10. The frame 20 includes a main chassis 25 forming a base of the mower 10, and a secondary frame structure 30 forming a body of the mower 10.

As shown, the frame 20 supports a seat 35 and a foot rest 40 positioned generally above the main chassis 25 of the frame 20. The seat 35 includes a base 37 and a backrest 39, and is adjustable in order to accommodate different sized users. In the illustrated embodiment, the seat 35 is slidable between a rear end 45 and a front end 50 of the mower to provide more or less leg room for users of different heights. The foot rest 40 is a platform that enables a user to step onto the mower 10 when getting into and out of the seat 35. Once the user is in an operating position, the foot rest 40 supports the user's feet above a mower deck 55. As will be described in greater detail below, the illustrated mower 10 also includes a parking brake system 516 extending through the foot rest 40.

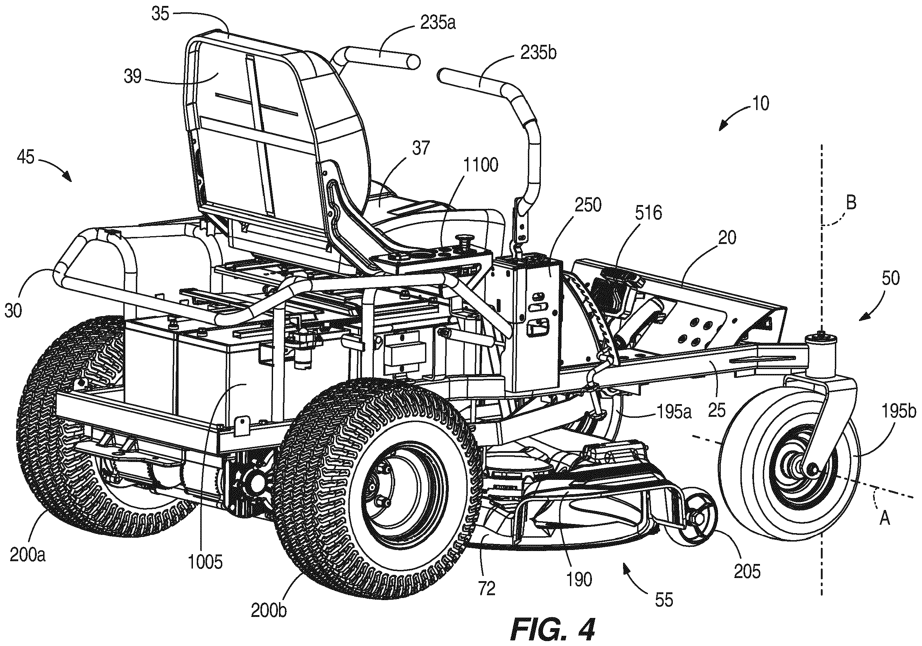

Referring to FIG. 4, the frame 20 supports a battery power source 1005 on the main chassis 25. In the illustrated embodiment, the battery power source 1005 is positioned at least partially underneath the seat 35 towards the rear end 45 of the mower 10. The battery power source 1005 provides power the various components of the mower 10, such as but not limited to, electric motors, controllers, user interface, brake system, etc.

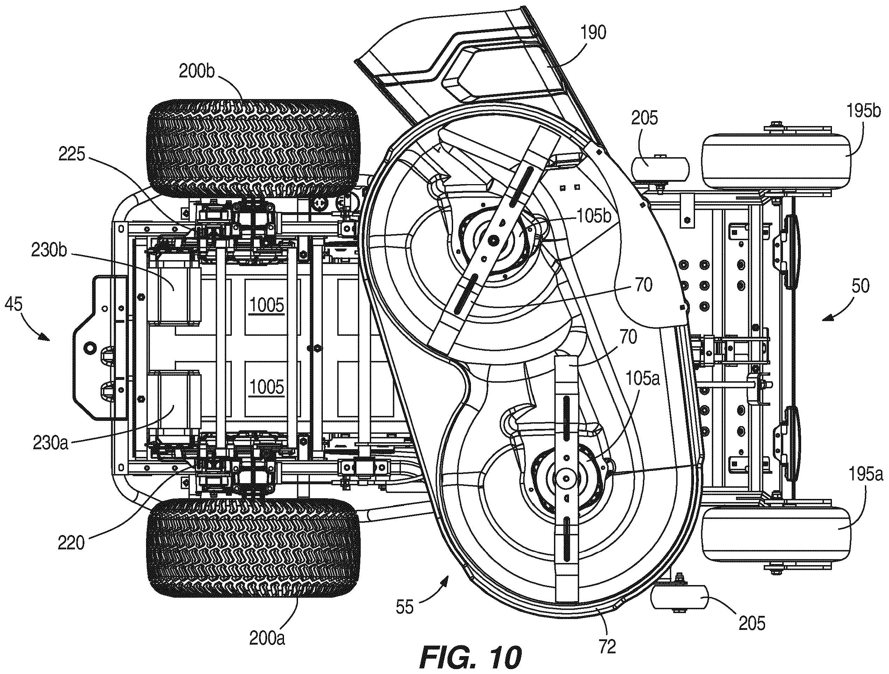

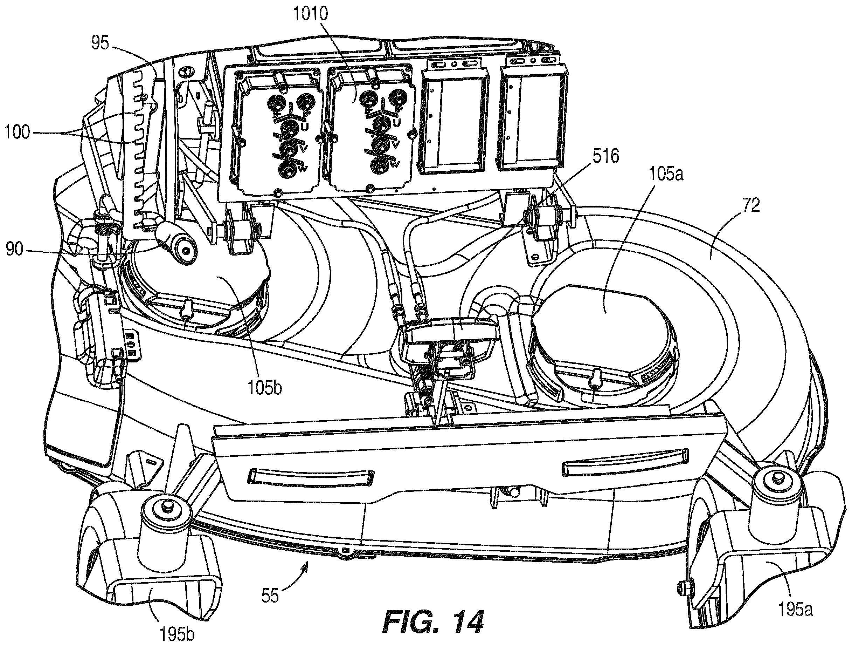

With reference to FIGS. 3, 5, and 6 the mower deck 55 is suspended below the main chassis 25 of the frame 20 and includes one or more cutting blades 70 (FIG. 10) at least partially surrounded by a shroud 72. In particular, the mower deck 55 is suspended below the chassis 25 by one or more linkages 75. In the illustrated embodiment, the mower deck 55 is suspended below the frame 20 by a first linkage 80 towards the front end 50 of the mower and a second linkage 85 towards the rear end 45 of the mower. The linkages 75 can be adjusted to lift or lower the mower deck 55 to different cutting heights. The lawn more includes a lever 90 (FIG. 14) adjacent the seat 35 that can be actuated by a user to lift or lower the mower deck 55. In the illustrated embodiment, the lever 90 is movable along a channel 95 having a series of teeth 100 for selectively receiving the lever 90. A user may slide the lever 90 along the channel 95 to adjust the height of the mower deck 55, and insert the lever 90 between the teeth 100 to maintain the mower deck 55 at the selected height. As will be understood by a person of ordinary skill in the art, the height of the mower deck 55 corresponds to a cut depth of the grass (i.e., the cut length of the grass).

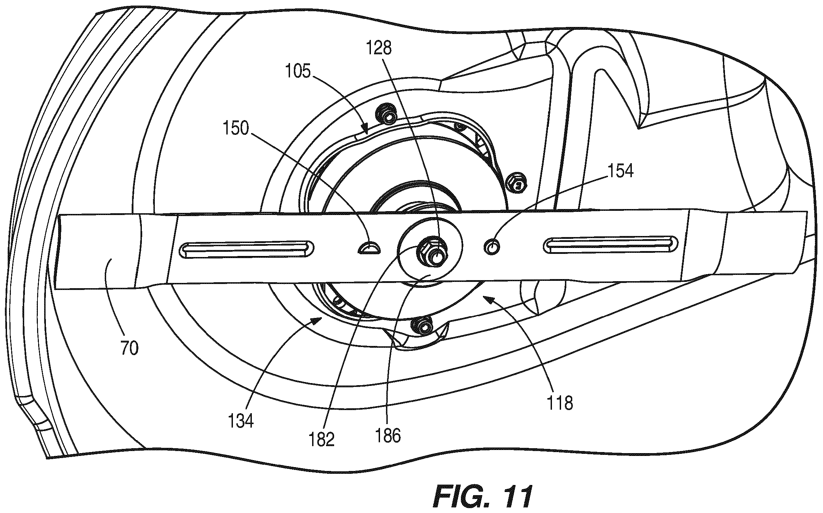

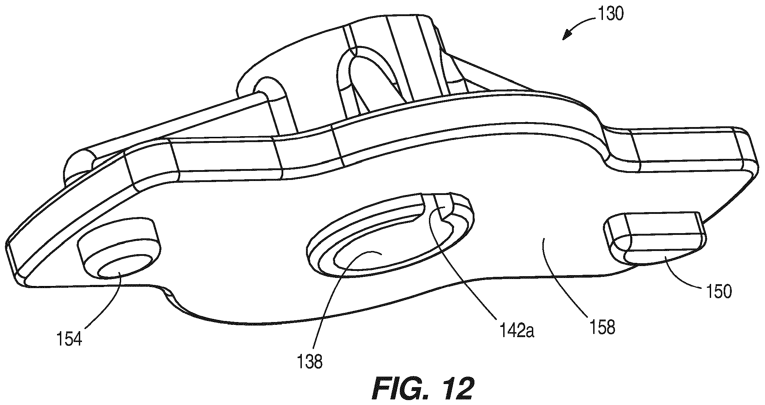

As shown in FIGS. 11-13 A, the blades 70 are attached to the mower deck 55 by a blade attachment system 118 positioned below the mower deck 55. The blade attachment system 118 is configured to attach a blade to a blade motor 105 of the mower 10. Each blade attachment system 118 includes a connecting member or adapter 130 coupled to a drive shaft 128 of the blade motor 105, the cutting blade 70, and a fastening system 134.

The adapter 130 includes a body defining a bore 138 configured to receive the drive shaft 128. Furthermore, each of the bore 138 and the drive shaft 128 define a notch 142a, 142b configured to receive a keying element 146 (e.g., a woodruff key). The keying element 146 is configured to co-rotate the adapter 130 and the drive shaft 128 together such that rotation of the adapter 130 relative to the drive shaft 128 is prevented. The adapter 130 further includes first and second projections 150, 154 extending from a surface 158 of the adapter 130. The first projection 150 has a generally semi-cylindrical shape and the second projection 154 has a generally cylindrical shape.

The blade 70 includes a body 162 defining a center opening 166 configured to receive the drive shaft 128. Furthermore, the blade 70 includes first and second apertures 172, 174 positioned on opposite sides of the center opening 166. The first and second apertures 172, 174 are configured to receive the first and second projections 150, 154, respectively. The shape of the apertures 172, 174 correspond to the shape of the projections 150, 154. Specifically, the blade 70 is coupled to the adapter 130 for co-rotation with the adapter 130. The shapes of the first projection 150 and aperture 172, and the second projection 154 and aperture 174 are different such that the blade 70 is positioned in the desired orientation when the blade 70 is coupled to the adapter 130. Also, the first projection 150 and aperture 172, and the second projection 154 and aperture 174 are spaced apart from the center opening 166 by different distances. In some embodiments, the area of the first aperture 172 (and the corresponding cross-sectional area of the first projection 150) is also different from the area of the second aperture 174 (and the corresponding cross-sectional area of the second projection 152). As such, the first and second projections 150, 154 and apertures 172, 174 are configured to form a blade orientation mechanism 178. The blade further includes a longitudinal axis extending centrally through the blade 70. The geometric center, or centroid, of each of the center opening 166, the first aperture 172, and the second aperture 174 are substantially aligned with the longitudinal axis. "Substantially" in this sense means within conventional manufacturing tolerances that allow for consistent and similarly performing blades 70. The blades 70 should have a negligible difference in performance parameters due to the manufacturing tolerances. In some embodiments, the substantial alignment with the longitudinal axis means no more than five millimeters away from the longitudinal axis. In other embodiments, the substantial alignment with the longitudinal axis means no more than one millimeter away from the longitudinal axis.

The fastening system 134 includes a fastener 182 (e.g., nut) and a disk 186 (e.g., washer). Specifically, the fastener 182 and the disk 186 are positioned on a threaded end of the drive shaft 128. As such, the blade 70 is positioned between the adapter 130 and the fastening system 134. In particular, the fastening system 134 is configured to axially secure the blade and the adapter 130 to the drive shaft 128.

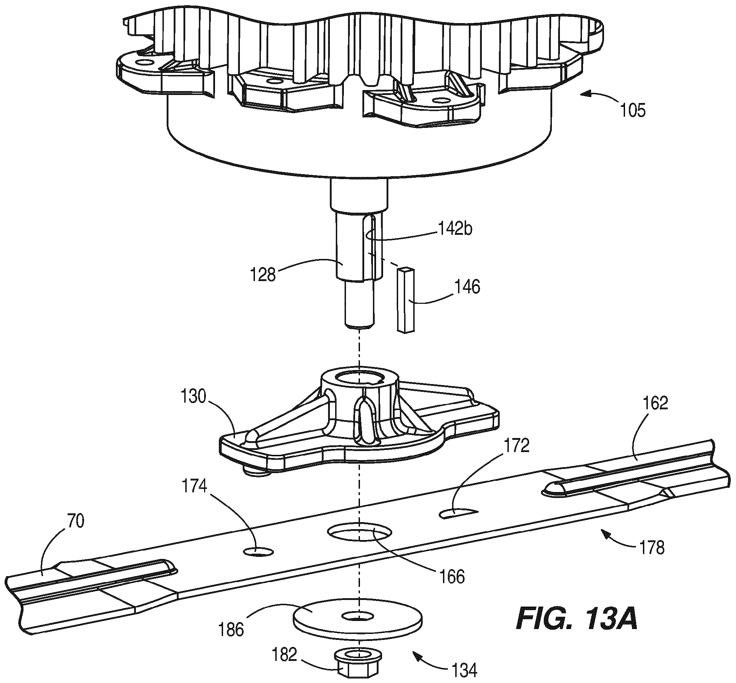

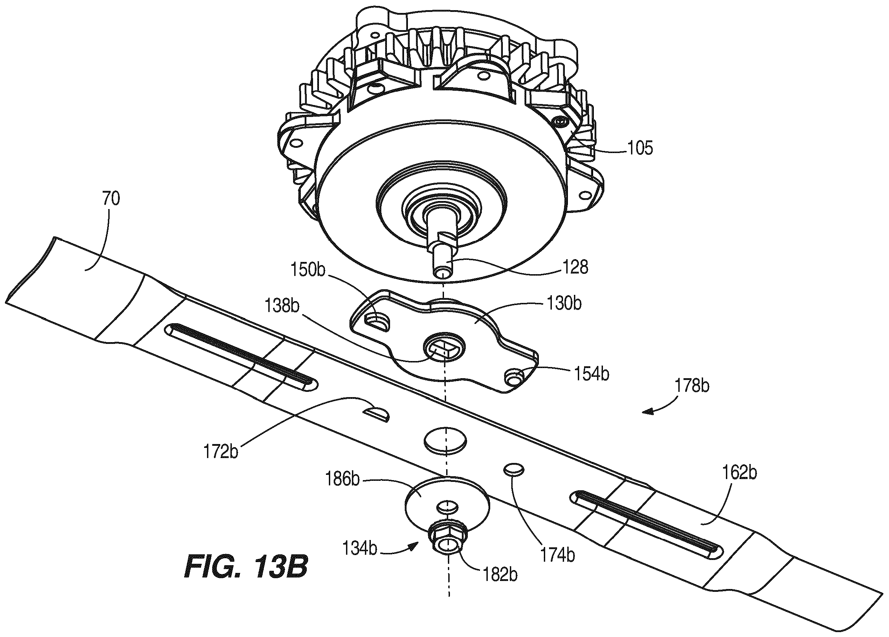

FIG. 13B illustrates another embodiment of a blade attachment system 118b for attaching the blades 70 to the mower deck 55, which does not include a keying element, as in FIG. 13A. The blade attachment system 118b is positioned below the mower deck 55 and includes an adapter 130b. The adapter 130b is coupled to the drive shaft 128 of the blade motor 105, the cutting blade 70 and a fastening system 134b.

The adapter 130b includes a body defining a bore 138b configured to receive the drive shaft 128. The adapter 130b further includes first and second projections 150b, 154b extending from a surface of the adapter 130b. The first projection 150b has a generally semi-cylindrical shape and the second projection 154b has a generally cylindrical shape. The blade 70 includes first and second apertures 172, 174 corresponding to the first and second projections 150b, 154b. Specifically, the shape of the apertures 172b, 174b correspond to the shape of the projections 150b, 154b, and thus, are configured to receive the projections 150b, 154b, respectively.

Accordingly, the blade 70 is coupled to the adapter 130b for co-rotation with the adapter 130b. The shapes of the first projection 150b and aperture 172b, and the second projection 154b and aperture 174b are different such that the blade 70 is positioned in the desired orientation when the blade 70 is coupled to the adapter 130b. As such, the first and second projections 150b, 154b and apertures 172b, 174b are configured to form a blade orientation mechanism 178b.

The fastening system 134b includes a fastener 182b (e.g., nut) and a disk 186b (e.g., washer). Specifically, the fastener 182b and the disk 186b are positioned on an end of the drive shaft 128b. As such, the blade 70 is positioned between the adapter 130b and the fastening system 134b. In particular, the fastening system 134b is configured to axially secure the blade and the adapter 130b to the drive shaft 128b.

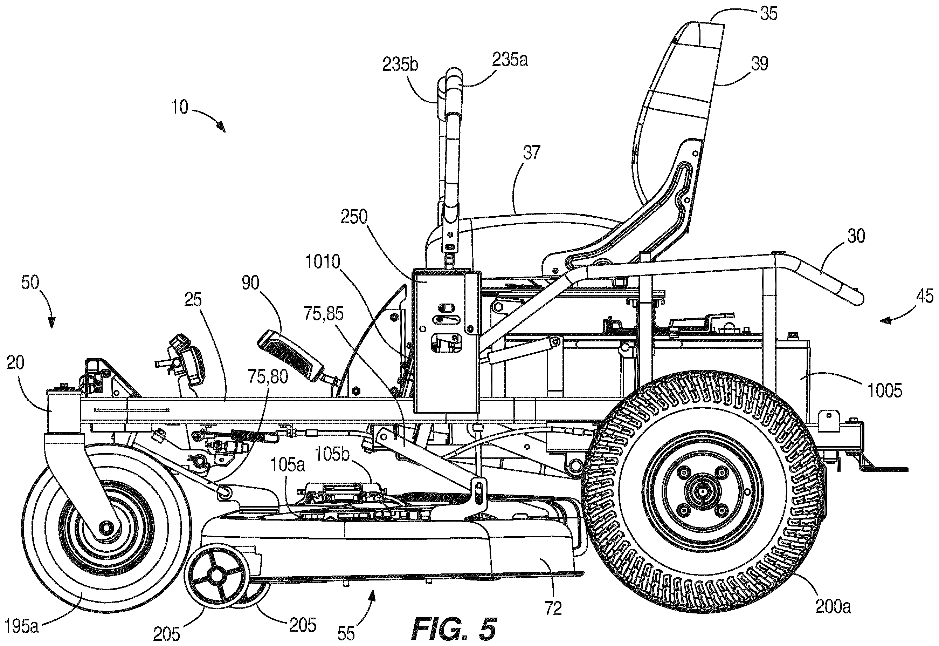

As shown in FIGS. 10 and 14, the mower deck 55 includes two cutting blades 70, which are each driven by separate electric blade motors 105. A first cutting blade 70a is driven by a first blade motor 105a, and a second cutting blade 70b is driven by a second blade motor 105b. The blade motors 105 are powered by the battery power source 1005. In other embodiments, the mower 10 may include greater or fewer blades. Furthermore, a single blade motor 105 can be configured to drive multiple cutting blades 70. In the illustrated embodiment, the mower deck 55 also includes a shroud extension 190 to help direct the grass clippings away from the mower 10. In the illustrated embodiment, the mower deck 55 is positioned midway between the front end 50 and rear end 45 of the mower 10 and at least partially under the seat 35. Specifically, as shown in FIGS. 5-6, the mower deck 55 is positioned between a front set of wheels and a rear set of wheels. The shroud extension 190 extends from the side of the mower between a front wheel and a rear wheel. In the illustrated embodiment, the mower deck 55 further includes a set of secondary wheels 205 to help the mower deck 55 roll across a ground surface.

With continued reference to FIGS. 3, 5, and 10, the mower 10 includes non-driven front wheels 195 and driven rear wheels 200. However, in other embodiments, the front wheels 195 may be driven wheels and the rear wheels 200 may be non-driven wheels. The front wheels 195 are positioned at the front end 50 of the frame 20 with a left front wheel 195a on the left side of the mower 10 and a right front wheel 195b on the right side of the mower 10. The front wheels 195 are castor wheels that can rotate about a horizontal axis A (FIGS. 3 and 4) to move the mower across a ground surface. The front wheels 195 also rotate about a vertical axis B (FIGS. 3 and 4) to steer the mower 10. In the illustrated embodiment, the front wheels 195 are not driven or steered directly. Rather, the front wheels 195 are driven and steered based on the driving force of the rear wheels 200.

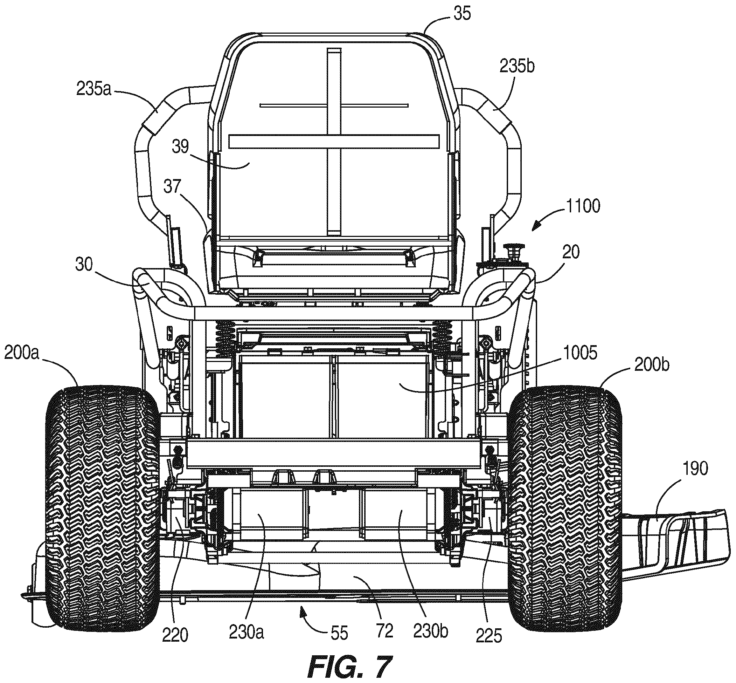

With reference to FIG. 7, the rear drive wheels are positioned at the rear end 45 of the frame 20 with a left drive wheel 200a on the left side of the mower 10 and a right drive wheel 200b on the right side of the mower 10. The drive wheels are driven by electric drive motors 230. In the illustrated embodiment, the drive wheels are independently driven by a right drive motor 230b and a left drive motor 230a. Specifically, the left drive wheel 200a is mechanically coupled to the left drive motor 230a via a left gear assembly 220. Likewise, the right drive wheel 200b is mechanically coupled to the right drive motor 230b via a right gear assembly 225.

The configuration of the drive wheels with independent drive motors 230 controls both the speed and direction of the mower 10 by providing selective actuation of one or both drive motors 230 to drive the wheels 200. When both drive motors 230 drive the wheels 200 at equally high speeds, the mower 10 will travel straight and at a high speed. When both drive motors 230 drive the wheels 200 at equally slow speeds, the mower 10 will travel straight at a slower speed. The drive motors 230 can drive the drive wheels in both a forward direction and a reverse direction. The mower 10 will turn instead of traveling straight when the drive wheels are driven at different speeds or in different directions (i.e., forward and reverse). In particular, the ratio of the left drive wheel 200a speed to the right drive wheel 200b speed determines the direction of the mower 10. For example, if the right drive motors 230b is driving the right drive wheel 200b at a faster speed than the left drive motor 230a is driving the left rear wheel, the mower 10 will turn towards the left. The turn radius of the mower 10 depends on the ratio of the speeds between the drive wheels. The greater the difference in speed between the two drive wheels, the sharper turn the mower 10 will take. When taken to an extreme, the independently driven drive wheels provide for zero turn radius drive capabilities. For example, if the right drive wheel 200b is driven in a forward direction and the left drive wheel 200a is driven in a reverse direction, the mower 10 will simply spin in place.

In the illustrated embodiment, the driving force of the drive motors 230 and the drive wheels 200 drives the front wheels 195 and forcibly steers the front wheels 195. In particular, the front wheels 195 rotate about the vertical axis B to help steer the mower 10 based on the direction the drive wheels push the mower 10. Likewise, the front wheels 195 rotate about the horizontal axis A based on the pace of the drive wheels, rather than being driven by a motor.

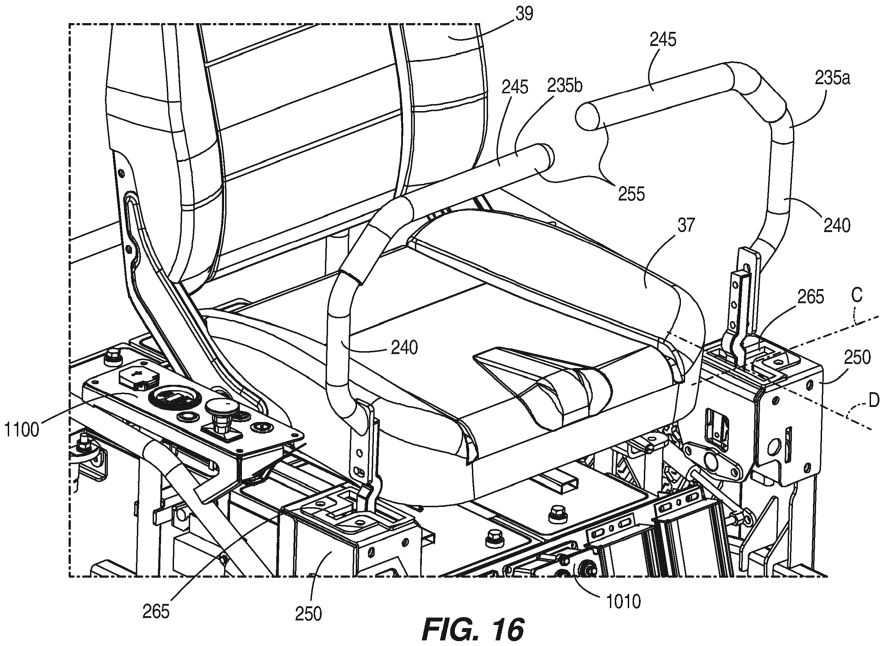

Referring to FIGS. 16-18, the mower 10 includes throttles 235 (or levers 90) that enable a user to control the speed and direction of the mower 10. The mower 10 includes a left throttle 235a positioned on the left side of the seat 35 and a right throttle 235b positioned on the right side of the seat 35. The throttles 235 each include a vertical portion 240 extending upward from the frame 20, and a horizontal portion 245 extending towards the center of the seat 35. Specifically, the horizontal portions 245 of the throttles 235 extend at least partially over the base 37 of the seat 35 where the user's legs are positioned. The horizontal portions 245 of the throttles 235 may include grips 255 for the user to grasp when maneuvering the throttles 235. The vertical portions 240 of the throttles 235 each extends upward from a housing 250 positioned on each side of the seat 35, respectively. However, in other embodiments, the throttles 235 can have different shapes and sizes.

Each throttle 235 controls the speed of the corresponding drive wheel 200 via the corresponding drive motor 230. For example, the right throttle 235b controls the speed of the right drive wheel 200b via the right drive motor 230b. The amount of movement of the throttle 235 indicates how fast the corresponding drive motor 230 should drive the rear wheel. Specifically, the throttles 235 can be rotated about a first axis C in either a forward direction, towards the front end 50 of the mower 10, or a rearward direction, towards the rear end 45 of the mower 10. The speed of the mower 10 is based on how far forward or how far rearward the throttles 235 are rotated.

Together, the throttles 235 control the direction of the mower 10 by commanding the drive motors 230 to drive the drive wheels at respective speeds. For example, the throttles 235 can both be rotated forward equal amounts to drive the mower 10 in a forwards direction, or can both be rotated backwards equal amounts, to drive the mower 10 in the reverse direction. The mower 10 can be turned by rotating one throttle 235 more forward (or more rearward) than the other throttle 235. For example, if the right throttle 235b is rotated farther forwards than the left throttle, the right drive wheel 200b will be driven faster than the left drive wheel 200a, and thus, the mower 10 will turn to the left.

When the throttles 235 are in the neutral position (i.e., straight up) the mower 10 remains stationary. Additionally, the throttles 235 can be rotated outwards (away from the driver) to lock the mower 10 in the neutral position and prevent inadvertent traveling of the mower 10. Specifically, the throttles 235 can be rotated about a second axis D that is perpendicular to the first axis C of rotation. Therefore, the throttles 235 are capable of rotating about two axis of rotation.

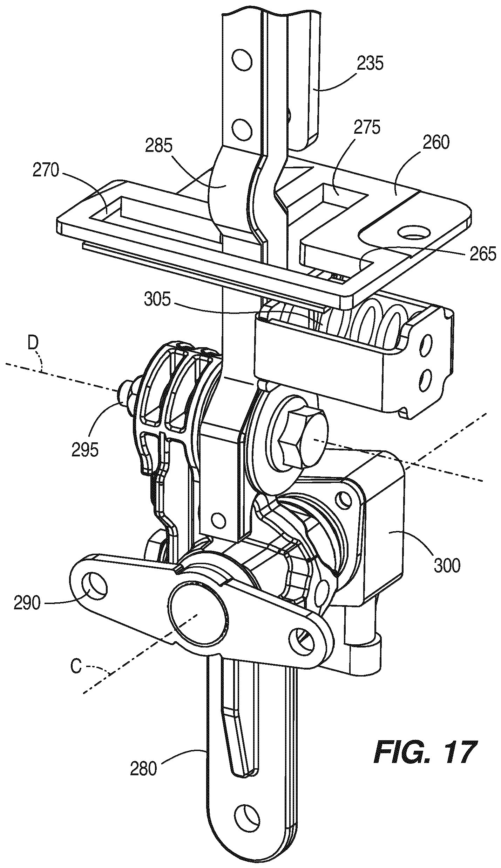

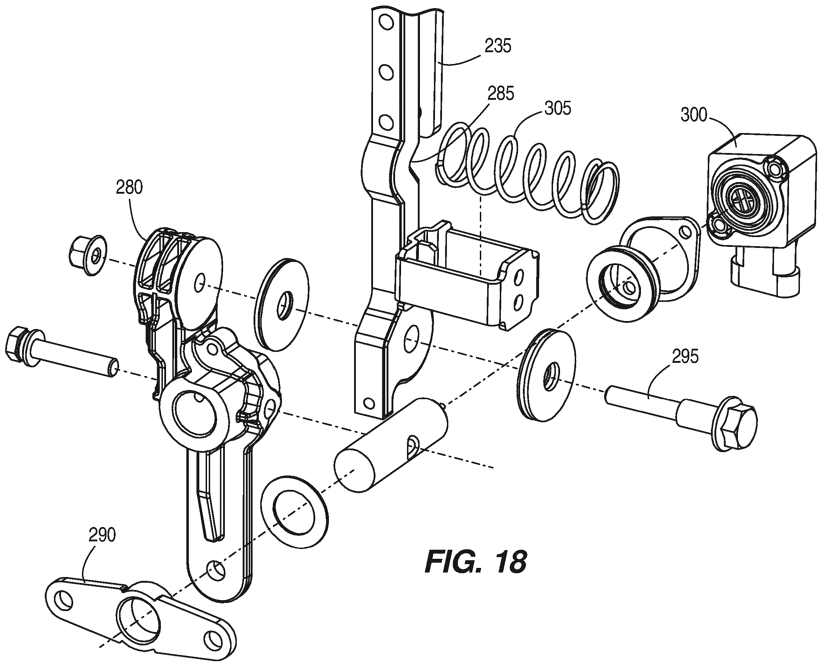

FIGS. 17 and 18 illustrate one of the throttles 235 in greater detail as an example. The housing 250 through which the throttles 235 extend includes a plate 260 with a T-shaped slot 265, which guides rotation of the throttle 235 forward, backwards, or outwards, as described above. The slot 265 includes a first slot 270 and a second slot 275 extending perpendicular to the first slot 270. The throttle 235 moves within the first slot 270 when rotating about the first axis C, and moves within the second slot 275 when rotating about the second axis D.

The throttle 235 includes a first arm 280 and a second arm 285. The first arm 280 is rotatably coupled to the housing 250 by a bracket 290. The bracket 290 enables the first arm 280 to rotate about the first axis C of rotation. The second arm 285 is rotatably coupled to the first arm 280 to enable the second arm 285 to rotate about the second axis D of rotation. In the illustrated embodiment, the second arm 285 is rotatably coupled to the first arm 280 by a pin or shaft 295.

Each throttle 235 includes a throttle sensor 300 to sense the amount of rotation of the corresponding throttle 235 about the first axis C as well as the direction of rotation (i.e., forwards or rearwards) of the corresponding throttle 235. Accordingly, the mower 10 includes a left throttle sensor 300a configured to sense the movement of the left throttle 235a, and a right throttle sensor 300b configured to sense the movement of the right throttle 235b. In the illustrated embodiment, each throttle sensors 300 is a rotational sensor positioned in line with the first axis C to detect the amount of rotation of the throttle 235 about the first axis C. In the illustrated embodiment, the throttle sensor 300 is a potentiometer. However, other types of sensors may be used to determine the degree of rotation of the handlebar. The information from the sensor is used to determine what speed and direction (i.e., forward or reverse) the respective drive motor 230 will drive the corresponding drive wheel. For example, when the sensor senses that the throttle 235 is rotated to a maximum position in the forward direction, the drive motor 230 will drive the drive wheel at a maximum forward speed.

With continued reference to FIGS. 16-18, the throttles 235 are partially biased towards the neutral position. In particular, the throttles 235 are biased towards the neutral position when rotated to the reverse direction, however, the throttles 235 are not biased towards the neutral position when rotated to the forward direction. Specifically, the throttles 235 include a spring 305 on one side, which biases the throttle 235 towards the neutral position from the reverse position. Accordingly, when a user rotates the throttle 235 backward to reverse the mower, the user must hold the throttle 235 in the backwards direction in order to continue to travel in reverse. However, when the throttle 235 is rotated forwards, the throttle 235 stays in the forwardly rotated position until the user rotates the throttle 235 to a new position. This one way biasing features provides a level of safety to help ensure that the user does not inadvertently continue traveling in reverse.

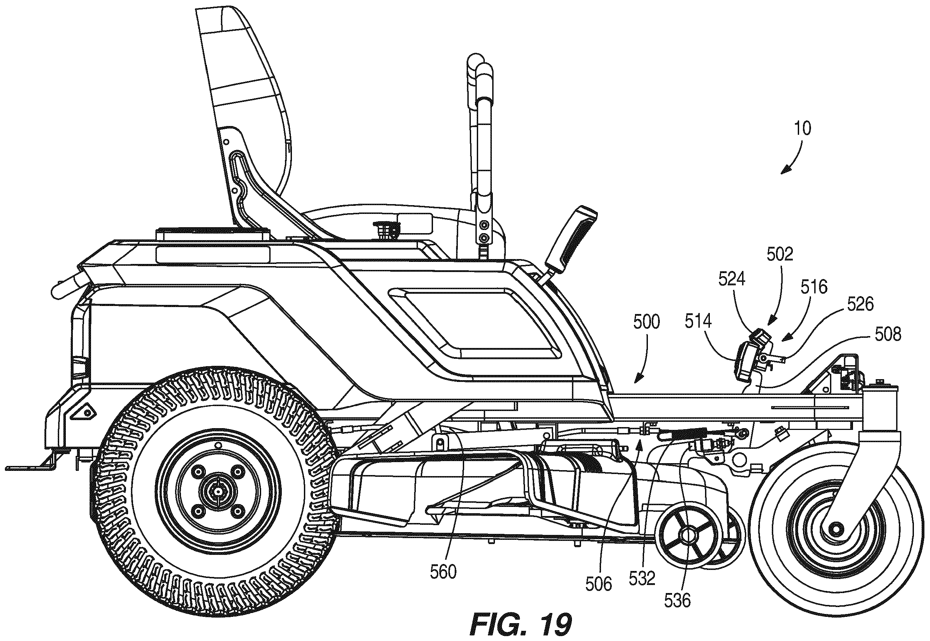

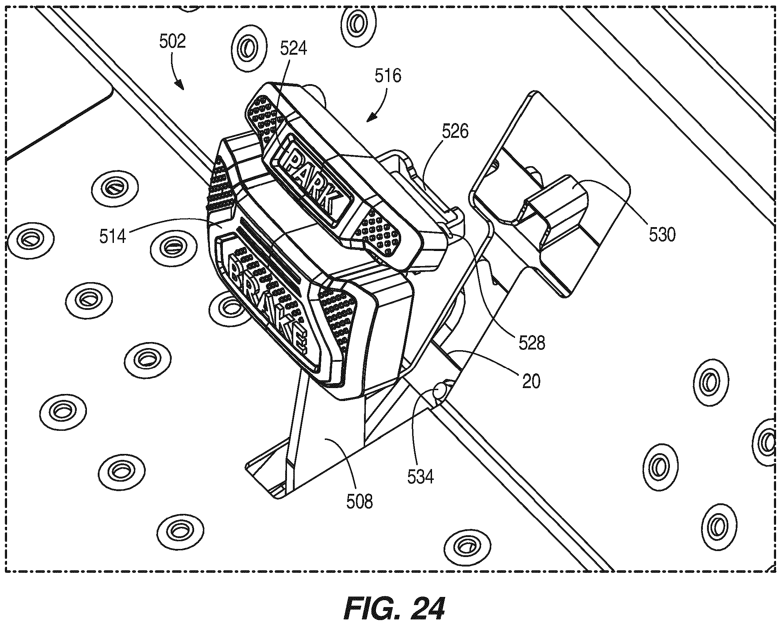

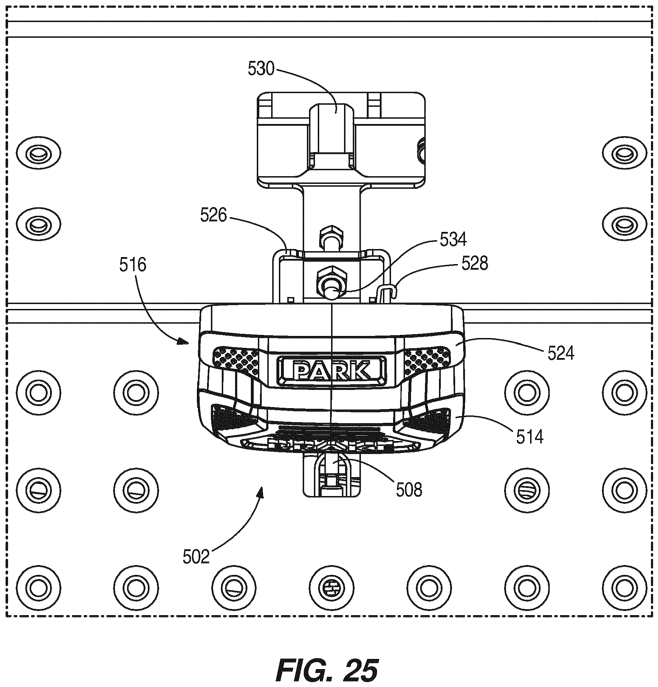

Turning now to FIGS. 19-26, the mower 10 further includes a braking system 500. The braking system 500 includes a brake control system 502, a brake actuation system 504, and a connection system 506.

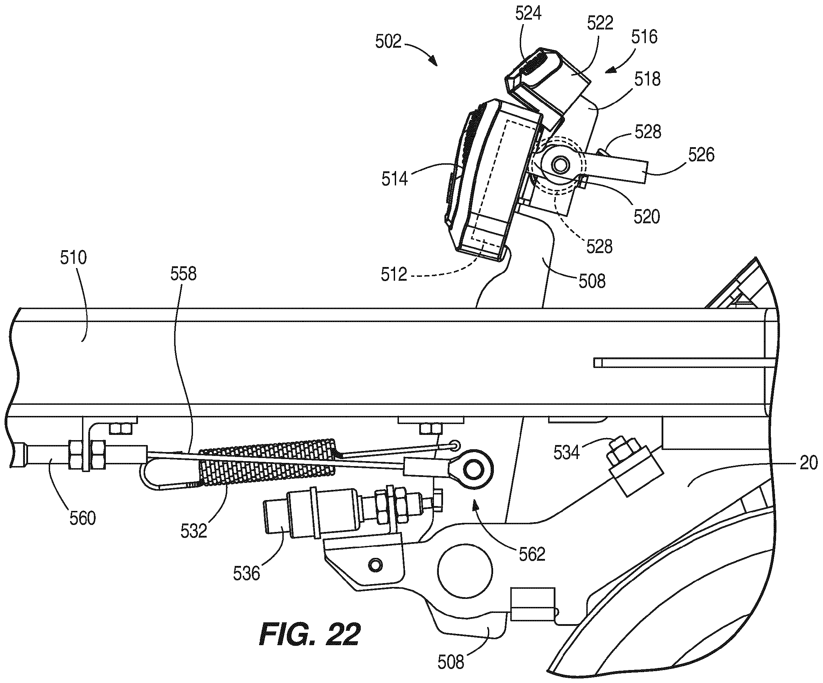

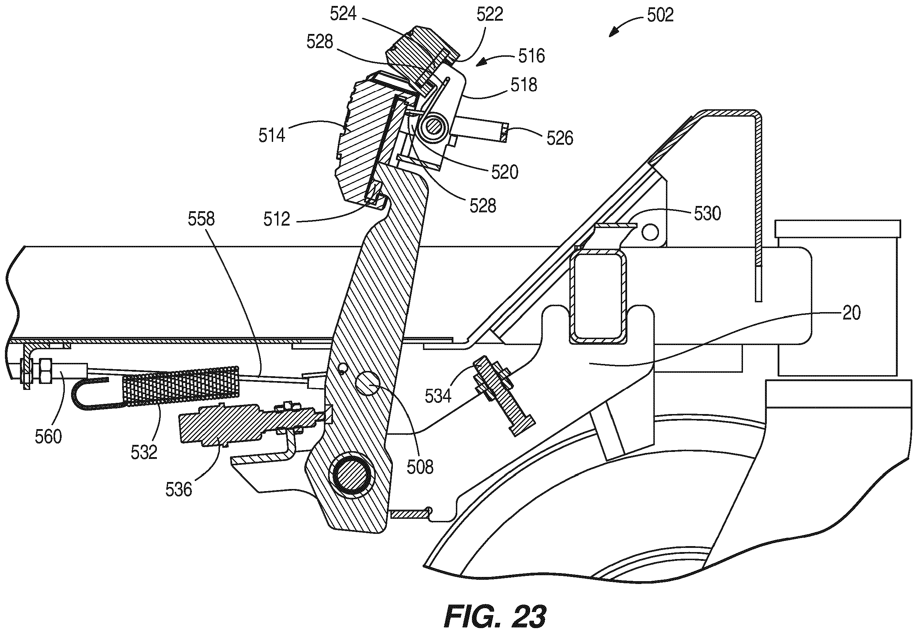

With reference to FIGS. 22 and 23, the brake control system 502 includes, a brake pedal member 508. The brake pedal member 508 is pivotally connected to a portion of the frame 20 of the mower 10. The brake pedal member 508 extends upwardly beyond the frame 20 to protrude above the mower deck 55 of the mower 10. The brake pedal member 508 includes a user engagement portion 512, which may be an end portion of the brake pedal member 508. The user engagement portion 512 may include, for instance, a grip surface disposed thereon to prevent a user's foot from slipping off of the brake pedal member 508. This grip surface may be in the form of grooves, knurling, or some other form of surface texture on the user engagement portion 512. As shown in the illustrated embodiment, the grip surface may be in the form of a replaceable polymer pad 514 disposed on the user engagement portion 512.

The brake control system 502 further includes a parking brake system 516. In the illustrated embodiment shown in FIGS. 22-25, the parking brake system 516 includes a parking brake member 518 pivotally connected to the brake pedal member 508. The parking brake member 518 may be connected to the brake pedal member 508 nearer the user engagement portion 512 than the pivotal connection between the brake pedal member 508 and the frame 20. In the illustrated embodiment, the parking brake member 518 is connected to the user engagement portion 512. Particularly, the user engagement portion 512 includes a pair of projections 520. The parking brake member 518 is pivotally connected to these two projections 520. The parking brake member 518 extends beyond the user engagement portion 512 of the brake pedal member 508.

Similar to the brake pedal member 508 above, the parking brake member 518 includes a user engagement portion 522. The user engagement portion 522 of the parking brake member 518 is disposed above the user engagement portion 512 of the brake pedal member 508. In the illustrated embodiment, this provides a stacked appearance of the two user engagement portions 512, 522 such that the user engagement portion 522 of the parking brake member 518 functions as a toe-pedal. As discussed above with regard to the user engagement portion 512 of the brake pedal member 508, the user engagement portion 522 of the parking brake member 518 may include, for instance, a grip surface disposed thereon to prevent a user's foot from slipping off the parking brake member 518. This grip surface may be in the form of grooves, knurling, or some other form of surface texture on the user engagement portion 522. As shown in the illustrated embodiment, the grip surface may be in the form of a replaceable polymer pad 524 disposed on the user engagement portion 522 of the parking brake member 518.

The parking brake system 516 further includes a catch 526 connected to at least one of the parking brake member 518 and the projections 520 of the brake pedal member 508. In the illustrated embodiment, the catch 526 is pivotally connected to the projections 520. In embodiments with the catch 526 connected to the parking brake member 518, the catch may pivot with the parking brake member or independently thereof. Actuation of the user engagement portion 522 of the parking brake member 518 pivots the catch 526 about the connection between the projections 520 and the parking brake member 518. This pivoting relationship is accomplished in the illustrated embodiment by virtue of a torsion spring 528 contacting the user engagement portion 522 of the parking brake member 518 and the catch 526 to bias the user engagement portion 522 and the catch apart from each other. The torsion spring 528 also contacts the user engagement portion 512 of the brake pedal member 508 to bias the user engagement portion 522 of the parking brake member 518 to the stacked position above the user engagement portion 512 of the brake pedal member 508. Stated another way, the torsion spring 528 biases the user engagement portion 522 of the parking brake member 518 toward a seat 35 of the mower 10.

The mower 10 also includes a hook 530 disposed on the frame 20. The hook 530 is positioned to be in selective engagement with the catch 526. When a user wishes to engage the parking brake system 516, the user presses down on the user engagement portion 512 of the brake pedal member 508 to a predetermined degree. Once the brake pedal member 508 has sufficiently pivoted about the connection to the frame 20, the catch 526 engages the hook 530. The hook 530 presses the catch 526 against the biasing force of the torsion spring 528 to bring the catch closer to the user engagement portion 522 of the parking brake member 518. This movement of the catch 526 causes the catch to pivot about the connection to the projections 520 until the catch clears the hook 530. Once the catch 526 has cleared the hook 530, the torsion spring 528 moves the catch to a position that traps the catch behind the hook. Stated another way, the hook 530 then hooks the catch 526.

To disengage the parking brake system 516, the user depresses the user engagement portion 522 of the parking brake member 518. Depressing the user engagement portion 522 of the parking brake member 518 causes the torsion spring 528 to force the catch 526 to rotate about the connection between the catch and the projections 520. This rotation causes the catch 526 to clear the hook 530. Once the catch 526 clears the hook 530, the user may begin to release the brake control system 502 to pivot the brake pedal member 508 about the connection to the frame 20. Of course, other embodiments contemplated herein may include the hook 530 connected to at least one of the parking brake member 518 and the projections 520 of the brake pedal member 508. In such embodiments, the catch 526 may be disposed on the frame 20.

With reference to FIGS. 22 and 23, the brake pedal member 508 is biased to an unactuated position by a tension spring 532. Stated another way, the tension spring 532 pulls the brake pedal member 508 toward the seat 35 of the mower 10. The mower 10 also includes a stop 534 disposed on the frame 20. The stop 534 prevents the brake pedal member 508 from moving beyond a predetermined actuation position when a user depresses the user engagement portion 512 of the brake pedal member. In the illustrated embodiment, the stop 534 (shown as a bolt and nuts) is adjustable relative to the frame 20 to set the predetermined actuation position. The end of the stop 534 comes into contact with a surface of the brake pedal member 508, thereby preventing the brake pedal member from advancing farther.

The brake control system 502 further includes at least one switch 536 as shown in FIGS. 22 and 23. In the illustrated embodiment, the switch 536 is selectively engaged by a face of the brake pedal member 508. When a user is not depressing the brake pedal member 508 (and the parking brake system 516 is not engaged), the tension spring 532 pulls the brake pedal member into the unactuated position and into engagement with the switch 536. Particularly, the brake pedal member 508 depresses a portion of the switch 536. When the switch 536 is disengaged (i.e., when the brake pedal member 508 is depressed), a signal is sent to a controller 1010 of the mower 10 to slow electric drive motors 230 powering the drive wheels 200. In some embodiments, disengagement of the switch 536 causes the controller 1010 to completely stop the electric drive motors 230 powering the drive wheels 200. Of course, although the illustrated embodiment signals a brake condition when the switch 536 is disengaged, the switch 536 may additionally or alternatively send a no-brake condition signal when the switch is engaged. Still other embodiments may include the switch 536 located elsewhere, such as adjacent the stop 534, to detect a brake condition when the switch is engaged instead of disengaged. The switch 536 may be electrically coupled to the controller 1010 either wirelessly or by one or more wires.

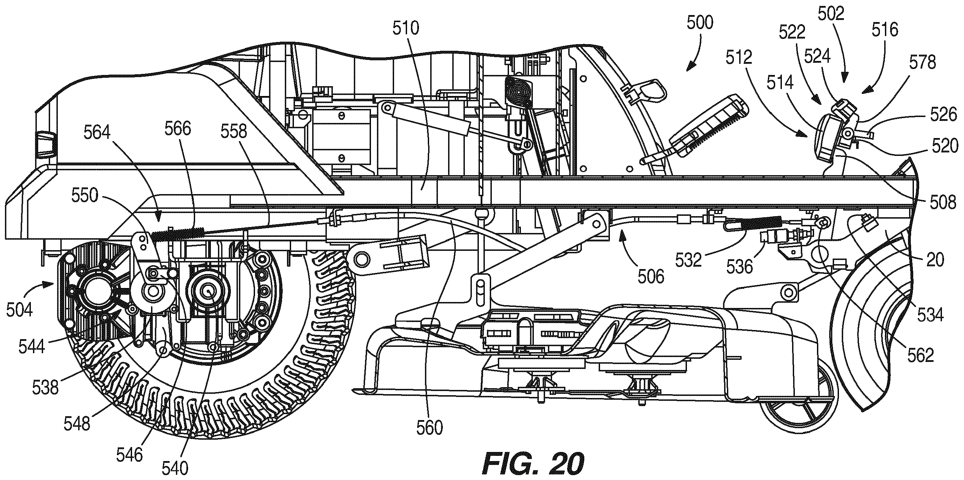

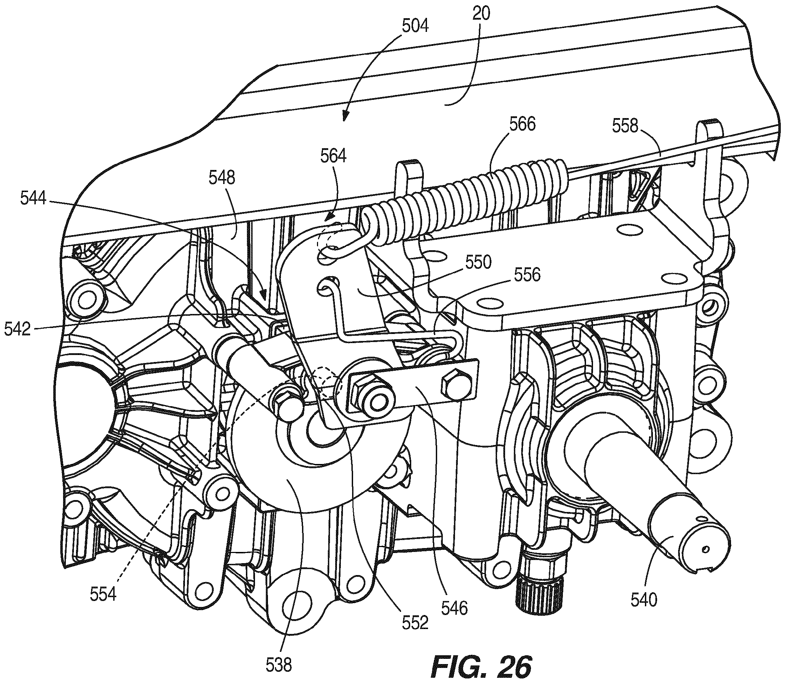

Turning now to FIGS. 20 and 26, each drive wheel 200 includes a brake actuation system 504 selectively braking the respective wheel. With particular reference to FIG. 26, each brake actuation system 504 includes a rotor 538 operably connected to the wheel 200 such that actuation of the brake actuation system causes slowing of the wheel. The rotor 538 may be directly connected to an axle 540 of the wheel 200 or may be connected to the axle via a transmission (not shown).

The brake actuation system 504 further includes at least one brake pad 542 positioned to selectively engage the rotor 538. The illustrated embodiment includes a brake caliper system 544 including a moving brake pad 542 on a first side of the rotor 538 and a stationary brake pad on a second side of the rotor opposite the first side. The second side of the rotor 538 is closer to a longitudinal midline of the mower 10 than the first side of the rotor.

The brake actuation system 504 also includes a mount member 546 connected to the mower 10. The mount member 546 may be connected to the frame 20 of the mower 10 or, as illustrated in FIG. 26, may be connected to a transmission case 548 of the transmission of a respective wheel 230.

The brake actuation system 504 further includes a pad actuation arm 550. The pad actuation arm 550 is pivotally connected to the mount member 546. In the illustrated embodiment, the pad actuation arm 550 is also pivotally connected to the brake caliper system 544. The pad actuation arm 550 includes a generally V-shaped or U-shaped section 552. This section 552 accepts at least one brake caliper post 554 of the brake caliper system 544. As the pad actuation arm 550 is pivoted about the pivotal connection to the mount member 546, the wall of the pad actuation arm pivots into engagement with the brake caliper post 554. As the wall of the pad actuation arm 550 increasingly advances against the brake caliper post 554, the rotational motion of the pad actuation arm converts to linear motion of the brake caliper post toward the rotor 538, thereby engaging the rotor with the brake actuation system brake pads 542.

The brake actuation system 504 also includes a torsion spring 556 positioned to return the pad actuation arm 550 to an unactuated position once the brake actuation system 504 is disengaged. In the illustrated embodiment, the torsion spring 556 is disposed about the mount location of the mount member 546 connected to the transmission case 548. In the illustrated embodiment, one end of the torsion spring 556 is coupled to the pad actuation arm 550, and another end of the torsion spring is coupled to the brake caliper system 544.

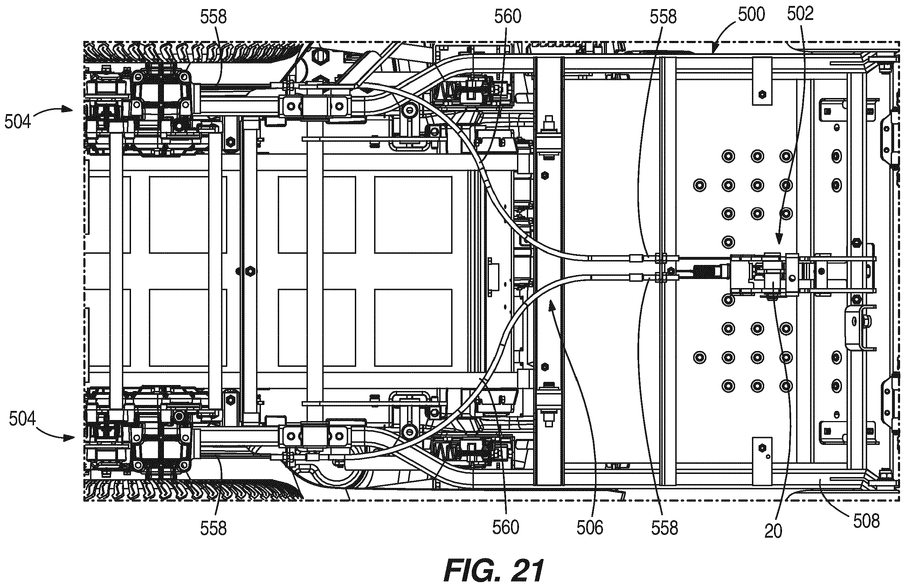

With reference to FIGS. 20-22 and 26, the braking system 500 further includes a connection system 506 connecting the brake control system 502 to the brake actuation system 504. The connection system 506 includes, as shown in FIG. 21, two separate brake cables 558. Each brake cable 558 rides in a respective cable sleeve 560. The cable sleeves 560 are mounted to an underside of the frame 20 of the mower 10.

Shown particularly in FIG. 22, each brake cable 558 includes a control end 562 connected to the brake pedal member 508. Actuation of the brake pedal member 508 causes the brake pedal member to pull the brake cables 558.

Turning now to FIG. 26, each brake cable 558 also includes an actuation end 564 connected to a respective pad actuation arm 550. In the illustrated embodiment, the brake cable 558 further includes a tension spring 566 disposed adjacent to the actuation end 564 of the brake cable. In this embodiment, the tension spring 566 is a coiled portion of the brake cable 558 and is formed as a single unitary piece with the brake cable. Alternatively, however, the actuation end 564 of the brake cable 558 could be connected to a tension spring 566 which is, in turn, connected directly to the respective pad actuation arm 550. The inclusion of the tension spring 566 allows a somewhat delayed and gradual engagement of the brake actuation system 504 upon actuation of the brake control system 502. This way, the brake actuation system 504 is less likely to abruptly move into engagement, avoiding a "slam on the brakes" type of experience every time the brake control system 502 is actuated.

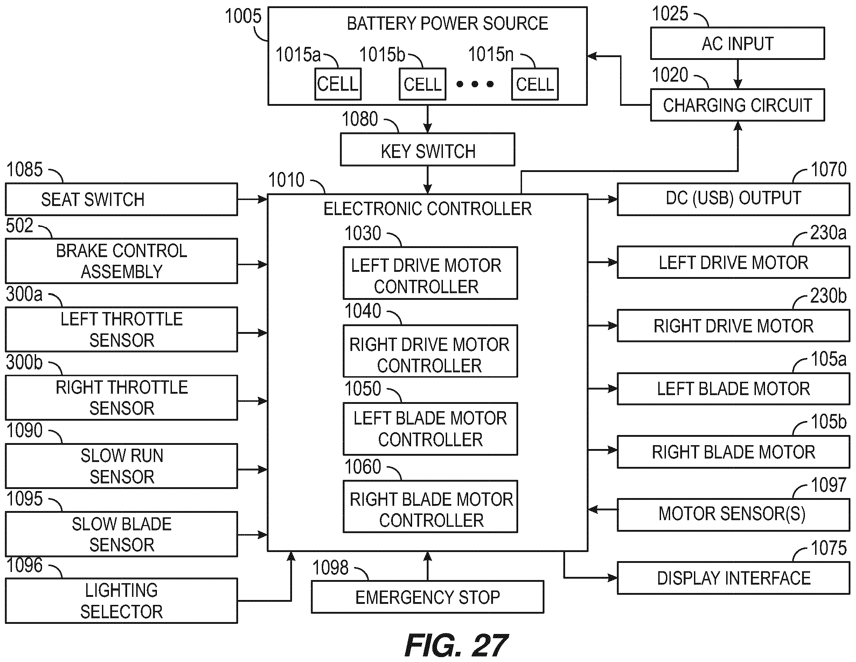

Referring to FIGS. 27-32, the mower 10 further includes a control system 1000. The control system 1000 includes the battery power source 1005 and an electronic controller 1010.

The battery power source 1005 comprises a plurality of cells 1015a-n, such as a plurality of lithium-ion battery cells 1015a-n, configured to receive and store energy for powering the mower 10. For example, in some embodiments, the battery power source 1005 includes four 12-volt cells 1015 connected in series to provide 48 volts, which powers the various motors and electronics of the mower 10. In some embodiments, a greater or fewer number of cells 1015 are used, a different size battery cell is used (e.g., 8-volt cell, 16-volt cell, etc.), or both.

A charging circuit 1020 of the mower 10 receives energy in the form of AC power from an AC input 1025 and may include various circuitry for transforming or conditioning the AC power into a form suitable for the battery power source 1005, such as transforming circuitry, rectifying circuitry, and the like.

The electronic controller 1010 is configured to control various functions of the mower 10 including driving of the various motors, sensing mower characteristics, providing user feedback, receiving user input. In some embodiments, the electronic controller 1010 includes at least one electronic processor coupled to at least one memory that stores data and instructions for execution by the at least one electronic processor to implement the functionality of the electronic controller 1010 described herein. For example, FIG. 27 illustrates one example embodiment of the electronic controller 1010 having four controllers, one for each motor, where each controller includes an electronic processor and a memory coupled thereto, the electronic processor configured to read and execute instructions from the memory to carry out the functionality of each controller described herein. In particular, the electronic controller 1010 includes a left drive motor controller 1030 configured to selectively energize motor coils of the left drive motor 230a to cause a left drive wheel to rotate at a desired rate and direction. Similarly, the electronic controller 1010 includes a right drive motor controller 1040 configured to selectively energize motor coils of the right drive motor 230b to cause a right drive wheel to rotate at a desired rate and direction. Accordingly, the electronic controller 1010 is configured to control speed and direction of the mower 10 via the left and right motor controllers 1030, 1040.

The electronic controller 1010 further includes a left blade motor controller 1050 configured to selectively energize motor coils of the left blade motor 105a to cause a left cutting blade to rotate. Similarly, the electronic controller 1010 includes a right blade motor controller 1060 configured to selectively energize motor coils of the right blade motor 105b to cause a right cutting blade to rotate. Accordingly, the electronic controller 1010 is configured to control a cutting blade speed for each of the left and right blade motors 105a, 105b via the left and right blade motor controllers 1050, 1060, respectively. In some embodiments, one or more of the motor controllers 1030, 1040, 1050, and 1060 are combined to result in an electronic controller 1010 with fewer than four motor controllers.

The electronic controller 1010 is further configured for controlling a supply of DC power to a DC output 1070, such as a USB port, a 12V DC automobile plug, and the like. Accordingly, a rider of the mower 10 may be conveniently provided with a DC output 1070 for powering various portable electronic devices. The electronic controller 1010 is further configured for controlling a display interface 1075, such as one or more LEDs, an LCD, and the like. Accordingly, the electronic controller 1010 may indicate operational information to a user via the display interface 1075, such as a state of charge, current operating mode, ground speed, and the like.

The electronic controller 1010 is configured for receiving a plurality of inputs, such as from sensors or user interfaces of the mower 10. For example, the electronic controller 1010 is configured for receiving communication signals from a key switch 1080, seat switch 1085, the brake control system 502, a left throttle 235a, a right throttle 235b, a slow-run selector 1090, a slow-blade selector 1095, a lighting selector 1096, one or more motor sensors 1097, and an emergency stop 1098. The electronic controller 1010 receives data signals from the key switch 1080 indicative of the position of the key switch, such as OFF, ACCESSORY, and ON. In some embodiments, the key switch 1080 is configured for enabling or disabling the delivery of electric power from the battery power source 1005 to the electronic controller 1010 and other electronic devices of the mower 10. In some embodiments, the electronic controller 1010 is configured for controlling one or more connected devices based on the data signal from the key switch 1080.

The electronic controller 1010 receives a data signal from the seat switch 1085 indicating that a rider is present on the seat 35 of the mower 10. In some embodiments, the electronic controller 1010 is configured to control one or more motors 230a, 230b, 105a, 105b based on the data signal from the seat switch 1085. For example, the electronic controller 1010 may slow or stop one or more motors 230a, 230b, 105a, 105b in the case that the data signal from the seat switch 1085 indicates the rider is absent.

The electronic controller 1010 receives data signals from the left throttle 235a, such as a requested direction and throttle ratio. Similarly, the electronic controller 1010 receives data signals from the right throttle 235b, such as a requested direction and throttle ratio. Accordingly, the electronic controller 1010 may control power to one or both of the left and right drive motor 230a, 230b based, at least in part, on one or more data signals from the left and right throttles 235a, 235b.

The electronic controller 1010 receives data signals from the brake control system 502 and is configured to control one of more of the motors 230a, 230b, 105a, 105b based at least in part on the data signals from the brake control system 502. For example, the electronic controller 1010 may be configured to disable power to one or more motors 230a, 230b, 105a, 105b in the case that a data signal from the brake control system 502 indicates that the parking brake is engaged. Additionally, in the case that a data signal from the brake control system 502 indicates that the brake is depressed or that the emergency stop button 1098 is depressed, the electronic controller 1010 may be configured to reduce, cease, or reverse power to one or more of the motors 230a and 230b to effect braking for the mower X00, and to one or more of the motors 105a and 105b to stop the mower blade rotation.

The electronic controller 1010 further receives data signals from the slow run selector 1090, such as a switch or push-button. The electronic controller 1010 is configured to activate a slow run mode in response to the slow run selector 1090 indicating an active state, and configured to deactivate a slow-run mode in response to the slow-run selector 1090 indicating an inactive state. In the case that the slow run mode indicates an inactive state, the electronic controller 1010 is configured to control the drive motors 230a, 230b in a first, normal speed operating mode. In the case that the slow run mode is in the active state, the electronic controller 1010 is configured to control the drive motors 230a, 230b in a second, reduced speed operating mode, as described below with respect to FIG. 14A. The slow-run selector 1090 may cycle between indicating an active state and an inactive state each time it is depressed (e.g., active state, inactive state, active state, inactive state).

The electronic controller 1010 receives data signals from the slow blade selector 1095. The electronic controller 1010 is configured to activate a slow blade mode in response to the slow blade selector 1095 indicating an active state, and configured to deactivate a slow-blade mode in response to the slow-blade selector 1095 indicating an inactive state. In the case that the slow blade selector 1095 indicates an active state, the electronic controller 1010 is configured to control the blade motors 105a, 105b in a first, normal speed operating mode. In the case that the slow blade selector 1095 indicates an inactive state, the electronic controller 1010 is configured to control the blade motors 105a, 105b in a second, reduced speed operating mode, as described below with respect to FIG. 14B. The slow-blade selector 1095 may cycle between indicating an active state and an inactive state each time it is depressed (e.g., active state, inactive state, active state, inactive state). In some embodiments, the electronic controller 1010 may be configured to allow both the slow run mode and the slow blade mode to be active at the same time.

The electronic controller 1010 further receives data signals from the lighting selector 1096. The electronic controller 1010 is configured to control one or more lighting elements, such as headlights based on the data signals from the lighting selector 1096. The electronic controller 1010 is further configured to receive data signals from one or more motor sensors 1097. Accordingly, the electronic controller 1010 may detect a disparity between a target motor speed and an actual motor speed, and may adjust the drive power to the one or more of the motors 230a, 230b, 105a, 105b associated with the disparity to reduce the disparity

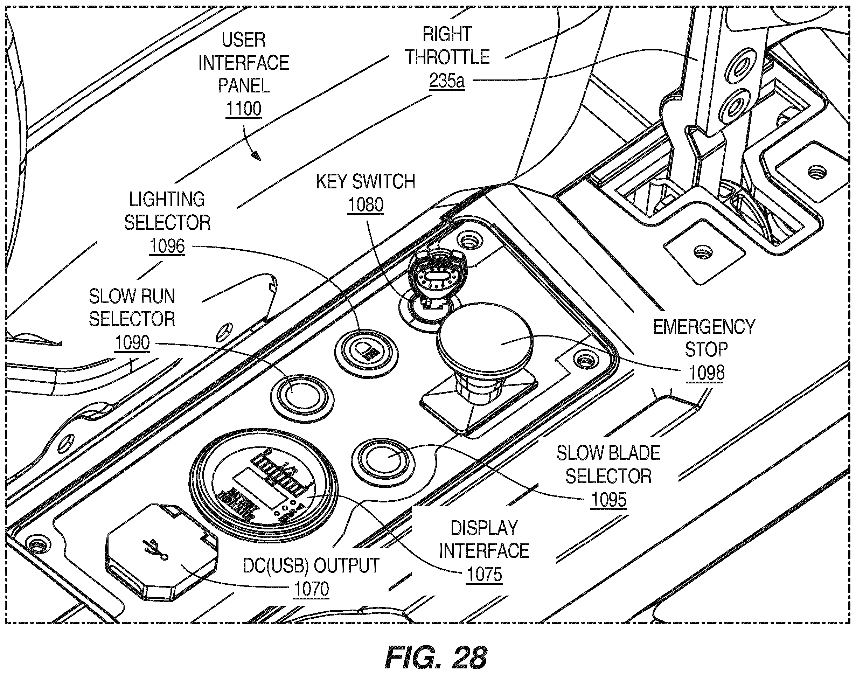

FIG. 28 illustrates an exemplary arrangement of elements of a user interface panel 1100 on the mower 10. The user interface panel 1100 includes the key switch 1080, the slow-run selector 1090, the slow-blade selector 1095, the lighting selector 1096, the DC output 1070, the display interface 1075, and the emergency stop 1098.

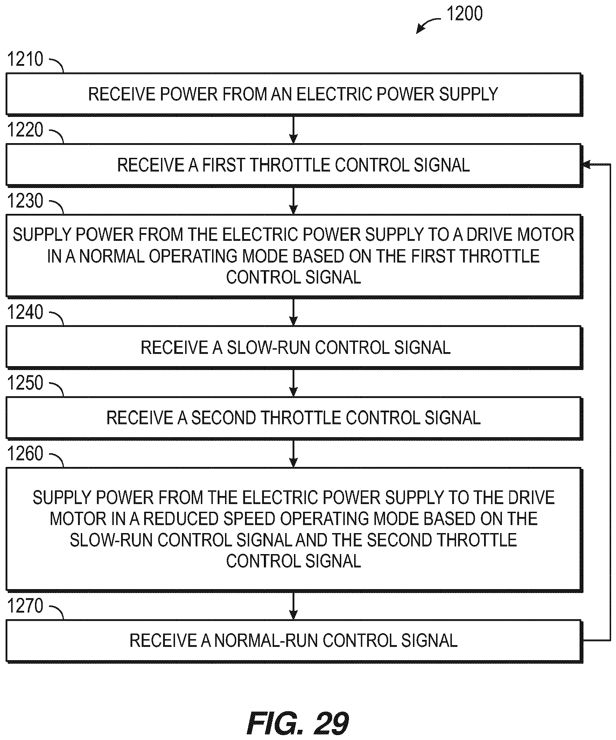

FIG. 29 is a flow diagram of a method 1200 of controlling a mower 10. At step 1210, power is received from the electric power supply 1005, such as in response to the key switch 1080 being oriented to the ON position. At step 1220, a first throttle control signal is received, for example, from the left throttle 235a. At step 1230, power is supplied to a drive motor in a normal operating mode based on the first throttle control signal. For example, the electronic controller 1010 may supply full power to the left drive motor 230a via the left drive motor controller 1030 in response to the left throttle 235a being placed in a fully forward position. A normal speed throttle profile stored in a memory of the electronic controller 1010 may be accessed and provide the particular power level to apply to the left drive motor 230a that is associated with the throttle level indicated by the first throttle control signal. At step 1240, a slow run control signal is received. For example, the electronic controller 1010 may receive a data signal from the slow run selector 1090 indicating that the slow-run selector 1090 is in the active state in response to the slow-run selector 1090 being actuated. The electronic controller 1010, in response, may access a reduced speed throttle profile from a memory of the electronic controller 1010 that maps throttle positions to a reduced speed relative to when the slow-run mode is not activated.

At step 1250, a second throttle control signal is received, for example, from the left throttle 235a. At step 1260, power is supplied to the drive motor in a reduced speed operating mode based on the second throttle control signal. For example, the electronic controller 1010 may supply less than full power to the left drive motor 230a via the left drive motor controller 1030 in response to the left throttle 235a being placed in a fully forward position. The reduced speed throttle profile may provide the particular power level to apply to the left drive motor 230a that is associated with the throttle level indicated by the second throttle control signal. At step 1270, a normal run control signal is received. For example, the electronic controller 1010 may receive a signal from the slow-run selector 1090 to deactivate the slow run mode. The electronic controller 1010, in response, may access the normal speed throttle profile from a memory of the electronic controller 1010 that maps throttle positions to a normal, higher speed relative to when the slow-run mode is activated. The electronic controller 1010 then returns to step 1220. Although described with respect to the left throttle 235a and the left drive motor 230a, the method 1200 is similarly applicable to the right throttle 235b and the right drive motor 230b, and may be executed in parallel by the electronic controller 1010 for both the left throttle 235a and the right throttle 235b. Additionally, in some embodiments, the method 1200 is applied to lawn mowers 10 having a single throttle input used to control one or more drive motors.

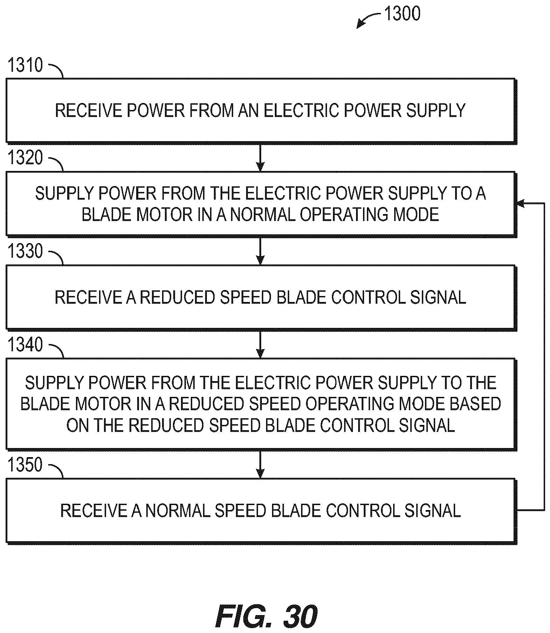

FIG. 30 is a flow diagram of a method 1300 of controlling a mower 10. At step 1310, power is received from the electric power supply 1005, such as in response to the key switch 1080 being oriented to the ON position. At step 1320, power is supplied to a blade motor in a normal operating mode. For example, the electronic controller 1010 may control the left blade motor 105a, the right blade motor 105b, or both blade motors at a first operating speed in the normal operating mode. The first operating speed may be stored in a memory of the electronic controller 1010 and may be accessed and provide the particular power level to apply to the left blade motor 105a. At step 1330, a slow blade control signal is received. For example, the electronic controller 1010 may receive a data signal from the slow blade selector 1095 indicating that the slow blade selector 1095 is in the active state in response to the slow blade selector 1095 being actuated. The electronic controller 1010, in response, may access a reduced operating speed from a memory of the electronic controller 1010 that is associated with the slow-blade mode.

At step 1340, power is supplied to the blade motor in a reduced speed operating mode to drive the motor at the reduced operating speed. For example, the electronic controller 1010 may control the left blade motor 105a, the right blade motor 105b, or both blade motors at the reduced operating speed in a reduced speed operating mode. At step 1350, a normal run control signal is received. For example, the electronic controller 1010 may receive a signal from the slow-blade selector 1090 to deactivate the slow blade mode. The electronic controller 1010, in response, may access the first operating speed from the memory of the electronic controller 1010. The electronic controller 1010 then returns to step 1320 to drive the blade motor at the first reduced speed. Although described with respect to the left blade motor 105a and the right blade motor 105b, the method 1300 is similarly applicable to mower 10s have more than two blade motors and to mower 10s having a single blade motor.

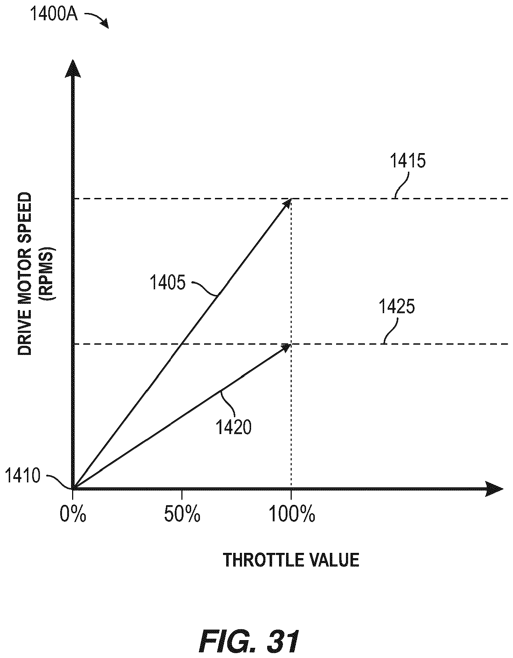

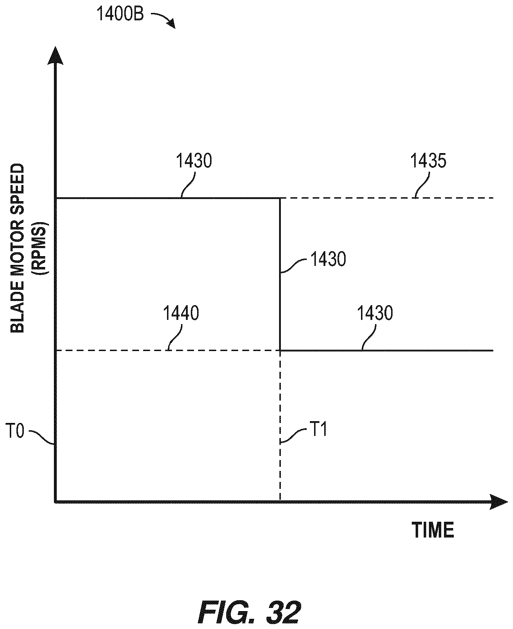

Turning now to FIGS. 31 and 32, an example motor speed profiles are illustrated for the slow-run and slow-blade modes described with respect to the flow charts of FIGS. 29 and 30, respectively.

FIG. 31 illustrates a graph 1400A of example motor drive speed curves of the mower 10 for the first, normal speed mode and the second, reduced speed mode described above with respect to the slow-run mode and FIG. 29. In the graph 1400A, the abscissa is a requested throttle value (e.g. 0-100%), with the ordinate being the drive motor speed (e.g., rotations per minute (RPMs) for the left drive motor 230a and/or the right drive motor 230b) of the mower 10. With reference to the flow chart of FIG. 29, in a normal operating mode, the mower 10 follows a normal speed curve 1405. The normal speed curve 1405 begins at a zero speed value 1410, corresponding to a requested throttle value of 0%. The normal speed curve continues linearly until a maximum speed value 1415, corresponding to a requested throttle value of 100%. The reduced-speed curve 1420 also begins at a zero speed value 1410, corresponding to a requested throttle value of 0%. The reduced-speed curve 1410 continues to a reduced maximum speed value 1425, corresponding to a requested throttle value of 100%. In the illustrated embodiment, the reduced maximum speed value 1425 is half of the maximum speed value 1415, but may be another speed value less than the maximum speed value 1415, as desired (e.g., 10%, 25%, 40%, 60%, or 75%). In some embodiments, the maximum speed value 1415 is set by the electronic controller 1010, for example, based on a user input or data from one or more sensors, such as sensors 1097.

In the illustrated embodiment, the normal speed curve 1405 and the reduced speed curve 1420 are both linear. In some embodiments, however, the normal speed curve 1405 may be a non-linear function, such that the mower 10 accelerates more rapidly over a first portion of the normal speed curve 1405 than over a second portion of the normal speed curve 1405. Similarly, the reduced speed curve 1420 may have a non-linear slope, such that the mower 10 accelerates less rapidly over a first portion of the reduced speed curve 1420 than over a second portion of the reduced speed curve 1420. Accordingly, the mower 10 may have improved maneuverability in confined environments while in a reduced speed mode.

In the illustrated embodiment, the normal speed curve 1405 and the reduced speed curve 1420 have different slopes over their respective entireties. In some embodiments, however, the reduced speed curve 1420 may be substantially similar to the normal speed curve 1405 from the zero-speed value 1410 to the reduced maximum speed value 1425. After the reduced maximum speed value 1425, the normal speed curve 1410 may continue as illustrated, with the reduced speed curve 1420 remaining at the reduced maximum speed value 1425.

FIG. 32 illustrates a graph 1400B of an example blade speed curve of the mower 10 including the first operating speed and the reduced operating speed described above with respect to the slow-blade mode and FIG. 30. In the graph 1400B, the abscissa is time, with the ordinate being the blade speed in revolutions per minute (RPM). The graph 1400B begins at a time T0, at which the mower 10 is in a normal operating mode. At time T0, the blade speed 1430 is set at a normal, first operating blade speed 1435 (e.g. 2400 RPM). The mower 10 may be operated indefinitely in the normal operating mode with the blade motors 105a, 105b maintaining the blades at the normal blade speed 1435. At time T1, the electronic controller 1010 receives the slow blade control signal. The electronic controller 1010 then sets the blade speed 1430 to a reduced operating blade speed 1440 (e.g. 1200 RPM). The mower 10 may then be operated indefinitely in the slow-blade operating mode or until a control signal is received by the electronic controller 10 to deactivate the slow-blade mode.

In the graph 1400B, the blade speed 1430 is shown to transition abruptly from the normal blade speed 1435 to the reduced blade speed 1440. In some embodiments, however, the electronic controller 1010 may control the blade motors 105a, 105b to reduce the blade speed 1435 more gradually. Although the graphs 1400 are shown separately, the electronic controller 1010 may control the mower 10 in one or both of the reduced speed and the slow-blade operating modes concurrently. For example, in one embodiment, the reduced speed operating mode and the slow-blade operating mode are independent. In the case that a user actuates both the slow-run selector 1090 and the slow-blade selector 1095, the electronic controller 1010 would control the mower 10 in both the reduced speed operating mode and the slow-blade operating mode concurrently until one or both of the slow-run selector 1090 and the slow-blade selector 1095 are actuated again.

Although the invention has been described in detail with reference to certain preferred embodiments, variations and modifications exist within the scope of the invention as set forth in the following claims.

## Claims

1. A blade (70) for a lawn mower, the blade (70) comprising:
a blade body (162, 162b) having a first end and a second end opposite the first end;
a longitudinal axis extending centrally along the blade body (162, 162b) and through the first end and the second end;
a center opening (166) defined in the blade body (162, 162b), the center opening (166) configured to receive a drive shaft (128, 128b);
a first aperture (172, 172b) defined in the blade body (162, 162b) between the center opening (166) and the first end, the first aperture (172, 172b) configured to receive a first projection (150, 150b);
a second aperture (174, 174b) defined in the blade body (162, 162b) between the center opening (166) and the second end, the second aperture (174, 174b) configured to receive a second projection (154, 154b);
wherein a centroid of each of the center opening (166), the first aperture (172, 172b), and the second aperture (174, 174b) is substantially aligned with the longitudinal axis, **characterized in that** the first aperture (172, 172b) has a different shape from the second aperture (174, 174b); and the centroid of the first aperture (172, 172b) is a first distance from the centroid of the center opening (166), the centroid of the second aperture (174, 174b) is a second distance from the centroid of the center opening (166), and the first distance is different from the second distance.

2. The blade (70) of claim 1, wherein
the first aperture (172, 172b) has a first area,
the second aperture (174, 174b)has a second area,
the first area is different from the second area, and
optionally the first distance is less than the second distance, and the first area is greater than the second area.

3. The blade (70) of claim 1, wherein
the first aperture (172, 172b) includes at least one straight side, and optionally has a semicircular shape.

4. The blade (70) of claim 3, further comprising
a pair of longitudinal sides, each longitudinal side laterally spaced apart from the longitudinal axis, and
wherein the straight side of the first aperture (172, 172b) faces one of the longitudinal sides.

5. The blade (70) of claim 1, wherein
the first aperture (172, 172b) is radially asymmetrical about its centroid, and the second aperture (174, 174b) is radially symmetrical about its centroid, or
the second aperture (174, 174b) is curvilinear, and optionally has a circular shape.

6. An attachment system (118, 118b) for connecting a blade (70) to a drive shaft (128, 128b) of a lawn mower (10) and the drive shaft (128, 128b) including a threaded end, the attachment system (118, 118b) comprising:
an adapter (130, 130b) configured to be coupled to the drive shaft (128, 128b) and configured to receive the blade (70), the adapter (130, 130b) including
an adapter body,
a central bore (138, 138b) defined in the adapter body, the central bore (138, 138b) configured to receive the drive shaft (128, 128b),
a first projection (150, 150b) extending from the adapter body configured to engage a first aperture (172, 172b) of the blade (70), and
a second projection (154, 154b) extending from the adapter body configured to engage a second aperture (174, 174b) of the blade (70), the second projection (154, 154b) on an opposite side of the central bore (138, 138b) from the first projection (150, 150b); and
a fastener (182, 182b) configured to threadingly engage with the threaded end of the drive shaft (128, 128b),
**characterized in that**
the first projection (150, 150b) includes a cross-sectional shape that is different from a cross-sectional shape of the second projection (154, 154b), and a centroid of the first projection cross-sectional shape is spaced apart from a centroid of the central bore (138, 138b) by a first distance, a centroid of the second projection cross-sectional shape is spaced apart from the centroid of the central bore (138, 138b) by a second distance, and the first distance is different from the second distance.

7. The attachment system (118, 118b) of claim 6, wherein the central bore (138, 138b)of the adapter (130, 130b) includes a corresponding flat portion to key the adapter (130, 130b) to a drive shaft (128, 128b) including at least on flat lateral surface and optionally a shoulder.

8. The attachment system (118, 118b) of claim 6, wherein
the first projection cross-sectional shape has an area that is different from the second projection cross-sectional shape.

9. The attachment system (118, 118b) of claim 6, wherein
the first projection (150, 150b) is radially asymmetrical about its centroid, and
the second projection (154, 154b) is radially symmetrical about its centroid.

10. The attachment system (118, 118b) of claim 6, wherein
the first projection (150, 150b) includes at least one flat lateral surface, and optionally has a semi-cylindrical shape, or
the second projection (154, 154b) is cylindrical, or
the adapter (130, 130b) is formed as a single unitary part.

11. A lawnmower (10) comprising:
a mower deck (55);
a drive shaft (128, 128b) projecting from the mower deck (55), the drive shaft (128, 128b) including a threaded end;
an attachment system (118, 118b) as claimed in claim 6 suspended below the mower deck (55), wherein
the adapter (130, 130b) of the attachment system (118, 118b) is coupled to the drive shaft, and
the fastener (182, 182b) of the attachment system (118, 118b) is threadingly engaged with the threaded end of the drive shaft (128, 128b); and
a blade (70) as claimed in claim 1 removably coupled between the adapter (130, 130b) and the fastener (182, 182b),
wherein the longitudinal axis of the blade (70) extends generally perpendicular to the drive shaft (128, 128b), and the center opening (166) of the blade (70) receives the drive shaft (128, 128b) therethrough.

## Patentansprüche

1. Messer (70) für einen Rasenmäher, wobei das Messer (70) Folgendes umfasst:
einen Messerkörper (162, 162b) mit einem ersten Ende und einem zweiten Ende gegenüber dem ersten Ende;
eine Längsachse, die sich mittig entlang des Messerkörpers (162, 162b) und durch das erste Ende und das zweite Ende erstreckt;
eine zentrale Öffnung (166), die in dem Messerkörper (162, 162b) definiert ist, wobei die zentrale Öffnung (166) konfiguriert ist, um eine Antriebswelle (128, 128b) aufzunehmen;
eine erste Öffnung (172, 172b), die in dem Messerkörper (162, 162b) zwischen der zentralen Öffnung (166) und dem ersten Ende definiert ist, wobei die erste Öffnung (172, 172b) konfiguriert ist, um einen ersten Vorsprung (150, 150b) aufzunehmen;
eine zweite Öffnung (174, 174b), die in dem Messerkörper (162, 162b) zwischen der zentralen Öffnung (166) und dem zweiten Ende definiert ist, wobei die zweite Öffnung (174, 174b) konfiguriert ist, um einen zweiten Vorsprung (154, 154b) aufzunehmen;
wobei ein Schwerpunkt jeder der zentralen Öffnung (166), der ersten Öffnung (172, 172b) und der zweiten Öffnung (174, 174b) im Wesentlichen mit der Längsachse ausgerichtet ist, **dadurch gekennzeichnet, dass** die erste Öffnung (172, 172b) eine unterschiedliche Form als die zweite Öffnung (174, 174b) aufweist; und der Schwerpunkt der ersten Öffnung (172, 172b) ein erster Abstand vom Schwerpunkt der zentralen Öffnung (166) ist, der Schwerpunkt der zweiten Öffnung (174, 174b) ein zweiter Abstand vom Schwerpunkt der zentralen Öffnung (166) ist, und der erste Abstand sich vom zweiten Abstand unterscheidet.

2. Messer (70) nach Anspruch 1, wobei
die erste Öffnung (172, 172b) einen ersten Bereich aufweist,
die zweite Öffnung (174, 174b) einen zweiten Bereich aufweist,
der erste Bereich sich von dem zweiten Bereich unterscheidet, und
optional der erste Abstand kleiner als der zweite Abstand ist, und der erste Bereich größer als der zweite Bereich ist.

3. Messer (70) nach Anspruch 1, wobei
die erste Öffnung (172, 172b) mindestens eine gerade Seite einschließt und optional eine halbkreisförmige Form aufweist.

4. Messer (70) nach Anspruch 3, ferner umfassend
ein Paar Längsseiten, wobei jede Längsseite seitlich von der Längsachse beabstandet ist, und
wobei die gerade Seite der ersten Öffnung (172, 172b) einer der Längsseiten zugewandt ist.

5. Messer (70) nach Anspruch 1, wobei
die erste Öffnung (172, 172b) um ihren Schwerpunkt radial asymmetrisch ist, und die zweite Öffnung (174, 174b) um ihren Schwerpunkt radial symmetrisch ist, oder
die zweite Öffnung (174, 174b) krummlinig ist und optional eine kreisförmige Form aufweist.

6. Befestigungssystem (118, 118b) zum Verbinden eines Messers (70) mit einer Antriebswelle (128, 128b) eines Rasenmähers (10) und wobei die Antriebswelle (128, 128b) ein Gewindeende einschließt, wobei das Befestigungssystem (118, 118b) Folgendes umfasst:
einen Adapter (130, 130b), der konfiguriert ist, um mit der Antriebswelle (128, 128b) gekoppelt zu werden und konfiguriert ist, um das Messer (70) aufzunehmen, wobei der Adapter (130, 130b) einschließt:
einen Adapterkörper,
eine zentrale Bohrung (138, 138b), die in dem Adapterkörper definiert ist, wobei die zentrale Bohrung (138, 138b) konfiguriert ist, um die Antriebswelle (128, 128b) aufzunehmen,
einen ersten Vorsprung (150, 150b), der sich von dem Adapterkörper erstreckt, der konfiguriert ist, um in eine erste Öffnung (172, 172b) des Messers (70) einzugreifen, und
einen zweiten Vorsprung (154, 154b), der sich von dem Adapterkörper erstreckt, der konfiguriert ist, um in eine zweite Öffnung (174, 174b) des Messers (70) einzugreifen, wobei der zweite Vorsprung (154, 154b) auf einer gegenüberliegenden Seite der zentralen Bohrung (138, 138b) von dem ersten Vorsprung (150, 150b) ist; und
ein Befestigungselement (182, 182b), das konfiguriert ist, um mit dem Gewindeende der Antriebswelle (128, 128b) gewindemäßig in Eingriff zu stehen,
**dadurch gekennzeichnet, dass**
der erste Vorsprung (150, 150b) eine Querschnittsform einschließt, die sich von einer Querschnittsform des zweiten Vorsprungs (154, 154b) unterscheidet, und ein Schwerpunkt der ersten Vorsprungsquerschnittsform von einem Schwerpunkt der zentralen Bohrung (138, 138b) um einen ersten Abstand beabstandet ist, ein Schwerpunkt der zweiten Vorsprungsquerschnittsform von dem Schwerpunkt der zentralen Bohrung (138, 138b) um einen zweiten Abstand beabstandet ist, und der erste Abstand sich von dem zweiten Abstand unterscheidet.

7. Befestigungssystem (118, 118b) nach Anspruch 6, wobei
die zentrale Bohrung (138, 138b) des Adapters (130, 130b) einen entsprechenden flachen Abschnitt einschließt, um den Adapter (130, 130b) mit einer Antriebswelle (128, 128b) zu verkeilen, die mindestens eine flache seitliche Oberfläche und optional eine Schulter einschließt.

8. Befestigungssystem (118, 118b) nach Anspruch 6, wobei
die erste Vorsprungsquerschnittsform einen Bereich aufweist, der sich von der zweiten Vorsprungsquerschnittsform unterscheidet.

9. Befestigungssystem (118, 118b) nach Anspruch 6, wobei
der erste Vorsprung (150, 150b) um seinen Schwerpunkt radial asymmetrisch ist, und
der zweite Vorsprung (154, 154b) um seinen Schwerpunkt radial symmetrisch ist.

10. Befestigungssystem (118, 118b) nach Anspruch 6, wobei
der erste Vorsprung (150, 150b) mindestens eine flache seitliche Oberfläche einschließt und optional eine halbzylindrische Form aufweist, oder
der zweite Vorsprung (154, 154b) zylindrisch ist, oder
der Adapter (130, 130b) als ein einzelnes einheitliches Teil ausgebildet ist.

11. Rasenmäher (10), umfassend:
eine Mäherdeckplatte (55);
eine Antriebswelle (128, 128b), die aus der Mäherdeckplatte (55) vorsteht, wobei die Antriebswelle (128, 128b) ein Gewindeende einschließt;
ein Befestigungssystem (118, 118b) nach Anspruch 6, das unterhalb der Mäherdeckplatte (55) aufgehängt ist, wobei
der Adapter (130, 130b) des Befestigungssystems (118, 118b) mit der Antriebswelle gekoppelt ist, und
das Befestigungselement (182, 182b) des Befestigungssystems (118, 118b) mit dem Gewindeende der Antriebswelle (128, 128b) gewindemäßig in Eingriff steht; und
ein Messer (70) nach Anspruch 1, das abnehmbar zwischen dem Adapter (130, 130b) und dem Befestigungselement (182, 182b) gekoppelt ist,
wobei sich die Längsachse des Messers (70) im Allgemeinen senkrecht zu der Antriebswelle (128, 128b) erstreckt, und die zentrale Öffnung (166) des Messers (70) die Antriebswelle (128, 128b) dort hindurch aufnimmt.

## Revendications

1. Lame (70) pour une tondeuse à gazon, la lame (70) comprenant :
un corps de lame (162, 162b) ayant une première extrémité et une seconde extrémité opposée à la première extrémité ;
un axe longitudinal s'étendant de manière centrale le long du corps de lame (162, 162b) et à travers la première extrémité et la seconde extrémité ;
une ouverture centrale (166) définie dans le corps de lame (162, 162b), l'ouverture centrale (166) étant configurée pour recevoir un arbre d'entraînement (128, 128b) ;
une première ouverture (172, 172b) définie dans le corps de lame (162, 162b) entre l'ouverture centrale (166) et la première extrémité, la première ouverture (172, 172b) étant configurée pour recevoir une première saillie (150, 150b) ;
une seconde ouverture (174, 174b) définie dans le corps de lame (162, 162b) entre l'ouverture centrale (166) et la seconde extrémité, la seconde ouverture (174, 174b) étant configurée pour recevoir une seconde saillie (154, 154b) ;
dans laquelle un centroïde de chacune de l'ouverture centrale (166), de la première ouverture (172, 172b), et de la seconde ouverture (174, 174b) est sensiblement aligné avec l'axe longitudinal, **caractérisée en ce que** la première ouverture (172, 172b) a une forme différente de la seconde
ouverture (174, 174b) ; et le centroïde de la première ouverture (172, 172b) est une première distance depuis le centroïde de l'ouverture centrale (166), le centroïde de la seconde ouverture (174, 174b) est une seconde distance depuis le centroïde de l'ouverture centrale (166), et la première distance est différente de la seconde distance.

2. Lame (70) selon la revendication 1, dans laquelle
la première ouverture (172, 172b) a une première superficie,
la seconde ouverture (174, 174b)a une seconde superficie,
la première superficie est différente de la seconde superficie, et
éventuellement la première distance est inférieure à la seconde distance, et la première superficie est supérieure à la seconde superficie.

3. Lame (70) selon la revendication 1, dans laquelle
la première ouverture (172, 172b) inclut au moins un côté droit, et a éventuellement une forme semi-circulaire.

4. Lame (70) selon la revendication 3, comprenant en outre
une paire de côtés longitudinaux, chaque côté longitudinal étant latéralement espacé à l'écart de l'axe longitudinal, et
dans laquelle le côté droit de la première ouverture (172, 172b) fait face à l'un des côtés longitudinaux.

5. Lame (70) selon la revendication 1, dans laquelle
la première ouverture (172, 172b) est radialement asymétrique autour de son centroïde, et la seconde ouverture (174, 174b) est radialement symétrique autour de son centroïde, ou
la seconde ouverture (174, 174b) est curviligne, et a éventuellement une forme circulaire.

6. Système de fixation (118, 118b) pour la connexion d'une lame (70) à un arbre d'entraînement (128, 128b) d'une tondeuse à gazon (10) et l'arbre d'entraînement (128, 128b) incluant une extrémité filetée, le système de fixation (118, 118b) comprenant :
un adaptateur (130, 130b) configuré pour être couplé à l'arbre d'entraînement (128, 128b) et configuré pour recevoir la lame (70),
l'adaptateur (130, 130b) incluant
un corps d'adaptateur,
un alésage central (138, 138b) défini dans le corps d'adaptateur, l'alésage central (138, 138b) étant configuré pour recevoir l'arbre
d'entraînement (128, 128b),
une première saillie (150, 150b) s'étendant depuis le corps d'adaptateur configuré pour venir en prise avec une première ouverture (172, 172b) de la lame (70), et
une seconde saillie (154, 154b) s'étendant depuis le corps d'adaptateur configuré pour venir en prise avec une seconde ouverture (174, 174b) de la lame (70), la seconde saillie (154, 154b) sur un côté opposé de l'alésage central (138, 138b) depuis la première saillie (150, 150b) ; et
une attache (182, 182b) configurée pour venir en prise de manière filetée avec l'extrémité filetée de l'arbre d'entraînement (128, 128b),
**caractérisé en ce que**
la première saillie (150, 150b) inclut une forme de section transversale qui est différente d'une forme de section transversale de la seconde saillie (154, 154b), et un centroïde de la première forme de section transversale de saillie est espacé à l'écart d'un centroïde de l'alésage central (138, 138b) par une première distance, un centroïde de la seconde forme de section transversale de saillie est espacé à l'écart du centroïde de l'alésage central (138, 138b) par une seconde distance, et la première distance est différente de la seconde distance.

7. Système de fixation (118, 118b) selon la revendication 6, dans lequel
l'alésage central (138, 138b)de l'adaptateur (130, 130b) inclut une portion plate correspondante pour ajuster l'adaptateur (130, 130b) à un arbre d'entraînement (128, 128b) incluant au moins une surface latérale plate et éventuellement un épaulement.

8. Système de fixation (118, 118b) selon la revendication 6, dans lequel
la première forme de section transversale de saillie a une superficie qui est différente de la seconde forme de section transversale de saillie.

9. Système de fixation (118, 118b) selon la revendication 6, dans lequel
la première saillie (150, 150b) est radialement asymétrique autour de son centroïde, et
la seconde saillie (154, 154b) est radialement symétrique autour de son centroïde.

10. Système de fixation (118, 118b) selon la revendication 6, dans lequel
la première saillie (150, 150b) inclut au moins une surface latérale plate, et a éventuellement une forme semi-cylindrique, ou
la seconde saillie (154, 154b) est cylindrique, ou
l'adaptateur (130, 130b) est formé en tant que partie monobloc unitaire.

11. Tondeuse à gazon (10) comprenant :
un plateau de tondeuse (55) ;
un arbre d'entraînement (128, 128b) faisant saillie depuis le plateau de tondeuse (55), l'arbre d'entraînement (128, 128b) incluant une extrémité filetée ;
un système de fixation (118, 118b) selon la revendication 6 suspendu sous le plateau de tondeuse (55), dans laquelle
l'adaptateur (130, 130b) du système de fixation (118, 118b) est couplé à l'arbre d'entraînement, et
l'attache (182, 182b) du système de fixation (118, 118b) est mis en prise de manière filetée avec l'extrémité filetée de l'arbre d'entraînement (128, 128b) ; et
une lame (70) selon la revendication 1 couplée de manière amovible entre l'adaptateur (130, 130b) et l'attache (182, 182b),
dans laquelle l'axe longitudinal de la lame (70) s'étend généralement perpendiculaire à l'arbre d'entraînement (128, 128b), et l'ouverture centrale (166) de la lame (70) reçoit l'arbre d'entraînement (128, 128b) à travers celle-ci.
